# EUROPEAN PATENT APPLICATION

(11) **EP 4 096 342 A1**
(43) Date of publication of application: **30.11.2022**
(21) Application number: 22171121.1
(22) Date of filing: 02.05.2022
(51) Int. Cl.: H04W 76/15, H04W 36/00, H04W 88/10, H04W 88/06

(54) **METHODS TO PREVENT MCG LINK FAILURE DUE TO FAILURE IN SCG LINK**

(30) Priority: 27.05.2021 US 202117332737
(71) Applicant: Apple Inc., Cupertino, CA 95014 (US)
(72) Inventor: KUMAR, Vijayant, Munich (DE); SAINI, Kulwinder, Munich (DE); KUMAR, Sushant, Neubiberg (DE)
(74) Representative: COPA Copenhagen Patents

(57) **Abstract**

Systems and methods for a user equipment (UE) operating in a multi-radio dual connectivity (MR-DC) mode with a master node (MN) and a secondary node (SN) are described herein. A UE receives master cell group (MCG) configuration information for an MCG link with the MN and secondary cell group (SCG) configuration information for an SCG link with the SN, attendant to an attempted MR-DC transition. The UE validates the MCG configuration information and determines that the SCG configuration cannot be applied. The UE applies the MCG configuration information and sends the MN a message indicating that the MCG configuration information and the SCG configuration information were each applied (thereby avoiding a determination of overall MR-DC transition failure due to the unusable SCG configuration information). The UE later sends the MN a message indicating that the SCG configuration information cannot be applied, allowing the network to appropriately react.

## Description

### TECHNICAL FIELD

This application relates generally to wireless communication systems, including systems and methods for preventing master cell group (MCG) link failure when a secondary cell group (SCG) link failure occurs due to SCG configuration/reconfiguration failure.

### BACKGROUND

Wireless mobile communication technology uses various standards and protocols to transmit data between a base station and a wireless communication device. Wireless communication system standards and protocols can include, for example, 3rd Generation Partnership Project (3GPP) long term evolution (LTE) (e.g., 4G), 3GPP new radio (NR) (e.g., 5G), and IEEE 802.11 standard for wireless local area networks (WLAN) (commonly known to industry groups as Wi-Fi^{®}).

As contemplated by the 3GPP, different wireless communication systems standards and protocols can use various radio access networks (RANs) for communicating between a base station of the RAN (which may also sometimes be referred to generally as a RAN node, a network node, or simply a node) and a wireless communication device known as a user equipment (UE). 3GPP RANs can include, for example, global system for mobile communications (GSM), enhanced data rates for GSM evolution (EDGE) RAN (GERAN), Universal Terrestrial Radio Access Network (UTRAN), Evolved Universal Terrestrial Radio Access Network (E-UTRAN), and/or Next-Generation Radio Access Network (NG-RAN).

Each RAN may use one or more radio access technologies (RATs) to perform communication between the base station and the UE. For example, the GERAN implements GSM and/or EDGE RAT, the UTRAN implements universal mobile telecommunication system (UMTS) RAT or other 3GPP RAT, the E-UTRAN implements LTE RAT (sometimes simply referred to as LTE), and NG-RAN implements NR RAT (sometimes referred to herein as 5G RAT, 5G NR RAT, or simply NR). In certain deployments, the E-UTRAN may also implement NR RAT. In certain deployments, NG-RAN may also implement LTE RAT.

A base station used by a RAN may correspond to that RAN. One example of an E-UTRAN base station is an Evolved Universal Terrestrial Radio Access Network (E-UTRAN) Node B (also commonly denoted as evolved Node B, enhanced Node B, eNodeB, or eNB). One example of an NG-RAN base station is a next generation Node B (also sometimes referred to as a or g Node B or gNB).

A RAN provides its communication services with external entities through its connection to a core network (CN). For example, E-UTRAN may utilize an Evolved Packet Core (EPC), while NG-RAN may utilize a 5G Core Network (5GC).

### BRIEF DESCRIPTION OF THE SEVERAL VIEWS OF THE DRAWINGS

To easily identify the discussion of any particular element or act, the most significant digit or digits in a reference number refer to the figure number in which that element is first introduced.
FIG. 1 illustrates an EN-DC architecture according to embodiments herein.
FIG. 2 illustrates an NR-DC architecture according to embodiments herein.
FIG. 3 illustrates an NE-DC architecture according to embodiments herein.
FIG. 4 illustrates an NGEN-DC architecture according to embodiments herein.
FIG. 5 illustrates a flow diagram showing a failure of both an MCG link and an SCG link at a UE upon the UE attempting to enter an MR-DC mode with an MN and an SN, according to an embodiment.
FIG. 6 illustrates a flow diagram showing a failure of both an MCG link and an SCG link at a UE upon the UE attempting to enter an MR-DC mode with an MN and an SN, according to an embodiment.
FIG. 7 illustrates a flow diagram showing a failure of both an MCG link and an SCG link at a UE upon the UE attempting to enter an MR-DC mode with an MN and an SN, according to an embodiment.
FIG. 8 illustrates a flow diagram showing a manner of preventing an MCG link failure at a UE due to an SCG link failure upon the UE attempting to enter an MR-DC mode with an MN and an SN, according to an embodiment.
FIG. 9 illustrates a flow diagram showing a manner of preventing an MCG link failure at a UE due to an SCG link failure upon the UE attempting to enter an MR-DC mode with an MN and an SN, according to an embodiment.
FIG. 10 illustrates a flow diagram showing a manner of preventing an MCG link failure at a UE due to an SCG link failure upon the UE attempting to enter an MR-DC mode with an MN and an SN, according to an embodiment.
FIG. 11 illustrates a method of a UE for entering an MR-DC mode with an MN and an SN, according to an embodiment.
FIG. 12 illustrates a method of an MN operable with a UE using an MR-DC mode with the MN and an SN, according to an embodiment.
FIG. 13 illustrates a method of an SN operable with a UE using an MR-DC mode with an MN and the SN, according to an embodiment.
FIG. 14 illustrates an example architecture of a wireless communication system, according to embodiments disclosed herein.
FIG. 15 illustrates a system for performing signaling between a wireless device and a network device, according to embodiments disclosed herein.

### DETAILED DESCRIPTION

Various embodiments are described with regard to a UE. However, reference to a UE is merely provided for illustrative purposes. The example embodiments may be utilized with any electronic component that may establish a connection to a network and is configured with the hardware, software, and/or firmware to exchange information and data with the network. Therefore, the UE as described herein is used to represent any appropriate electronic component.

Multi-radio dual connectivity (MR-DC) is a generalization of Intra-E-UTRA dual connectivity (DC), where a multiple Rx/Tx capable UE may be configured to utilize resources provided by two different nodes, one providing NR access and the other one providing either LTE or NR access. One node may act as a master node (MN) and the other may act as a secondary node (SN). The MN and SN may be connected via a network interface, and at least the MN is connected to the core network. The MN and/or the SN may be operated with shared spectrum channel access.

The UE can access the network using either one network node or using two different nodes with various MR-DC modes. Examples of possible MR-DC modes include an E-UTRA-NR dual connectivity (EN-DC) mode, an NR-E-UTRA dual connectivity (NE-DC) mode, an NG-RAN E-UTRA-NR dual connectivity (NGEN-DC) mode, and an NR-NR dual connectivity (NR-DC) mode. In these MR-DC modes, the UE may communicate with the MN using one or more cells of a master cell group (MCG) that is available/provided by the MN, and the UE may communicate with the SN using one or more cells of a secondary cell group (SCG) that is provided by the SN. Each of the MCG and the SCG communicate with the UE using respectively one or more cells that includes at least a respective special cell (SpCell), with the SpCell of the MCG being referred to sometimes as a PCell and the SpCell of the SCG being referred to sometimes as a PSCell. As described herein, the connection path between a UE and an MCG may be referred to herein as an MCG link and the connection path between a UE and an SCG may be referred to herein as an SCG link.

Some MR-DC modes discussed herein may make use of certain kinds of NG-RAN base stations other than a gNB. For example, some MR-DC modes may include ng-eNBs (which provide LTE user plane and control plane protocol terminations towards the UE while being connected to a 5GC) and en-gNBs (which provide 5G (NR) user plane and control plane protocol terminations towards the UE while being connected to an EPC).

To contrast with MR-DC modes, as discussed herein, a UE connected to the network using only one network node (i.e., not according to an MR-DC mode using two different nodes) may be referred to as a mode associated with a RAT type provided to the UE by that single network node. For example, an NR mode at a UE may correspond to a connection with a gNB or an en-gNB, and an LTE mode at a UE may correspond to a connection with an eNB or an ng-eNB).

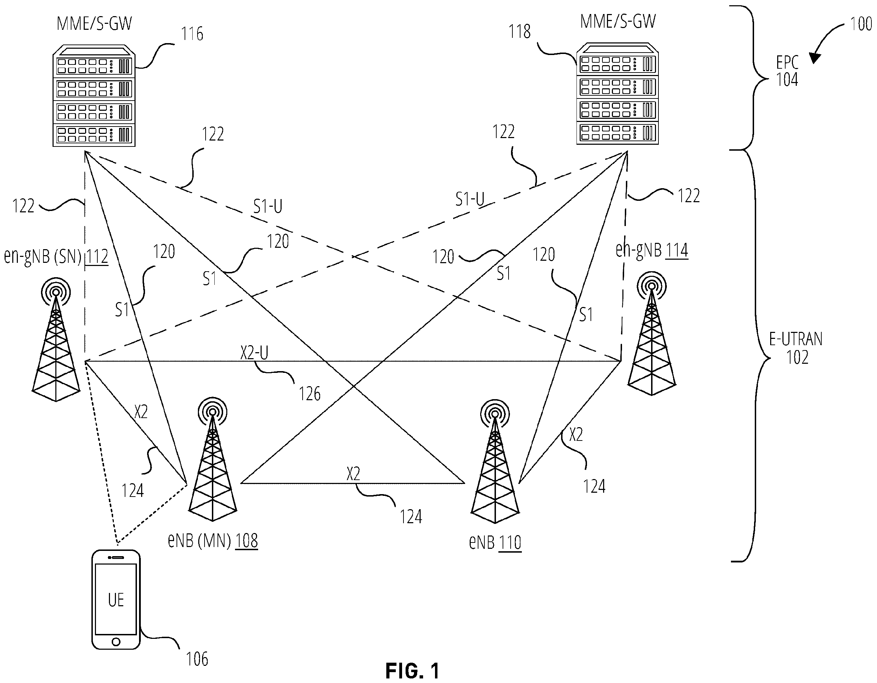

FIG. 1 illustrates an EN-DC architecture 100 according to embodiments herein. The EN-DC architecture 100 includes an E-UTRAN 102 and an EPC 104. The E-UTRAN 102 supports MR-DC via EN-DC, in which a UE (in FIG. 1, the UE 106) is connected to one eNB that acts as a MN (in FIG. 1, the eNB (MN) 108) and one en-gNB (in FIG. 1, the en-gNB (SN) 112) that acts as a SN. An en-gNB such as the en-gNB (SN) 112 may act as an SN in EN-DC. In FIG. 1, the EPC 104 may comprise one or more Mobility Management Entity/Serving Gateways (MME/S-GWs), such as an MME/S-GW 116 and an MME/S-GW 118. By way of example, the E-UTRAN 102 may comprise the eNB (MN) 108, an eNB 110, the en-gNB (SN) 112, and an en-gNB 114. Each of the eNB (MN) 108 and the eNB 110 may be connected to the EPC 104 via one or more S1 interfaces 120 and to one or more en-gNBs via one or more X2 interfaces 124. Each of the en-gNB (SN) 112 and the en-gNB 114 may be connected to the EPC 104 via one or more S1-U interfaces 122. The en-gNB (SN) 112 and the en-gNB 114 may be connected to one another through an X2-U interface 126.

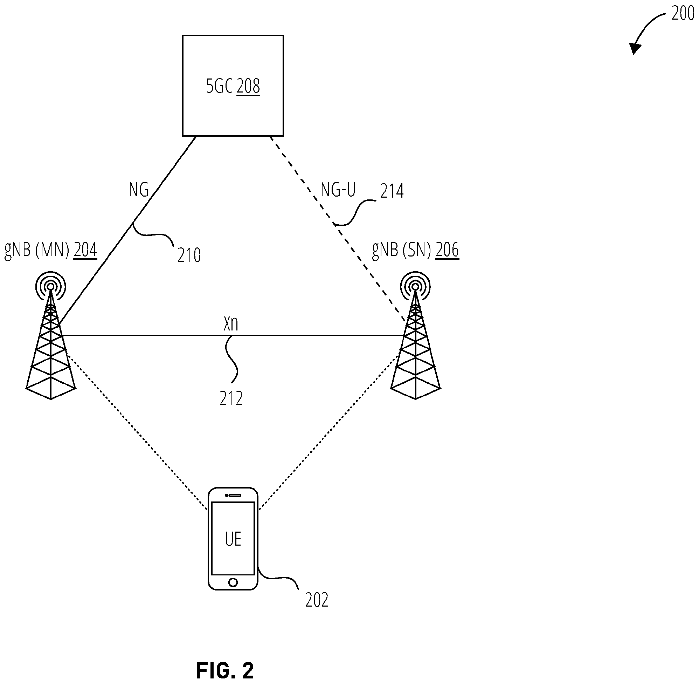

FIG. 2 illustrates an NR-DC architecture 200 according to embodiments herein. By way of example, the NR-DC architecture 200 of FIG. 2 illustrates a UE 202, a gNB (MN) 204, a gNB (SN) 206, and a 5G core network (5GC) 208. In NR-DC, a UE 202 is connected to a first gNB (MN) 204 that acts as an MN and a second gNB (SN) 206 that acts as an SN. The gNB (MN) 204 is connected to the 5GC 208 via an NG interface 210, and connected to the gNB (SN) 206 via an Xn interface 212. Further, the gNB (SN) 206 may be connected to the 5GC 208 via an NG-U interface 214 in some embodiments.

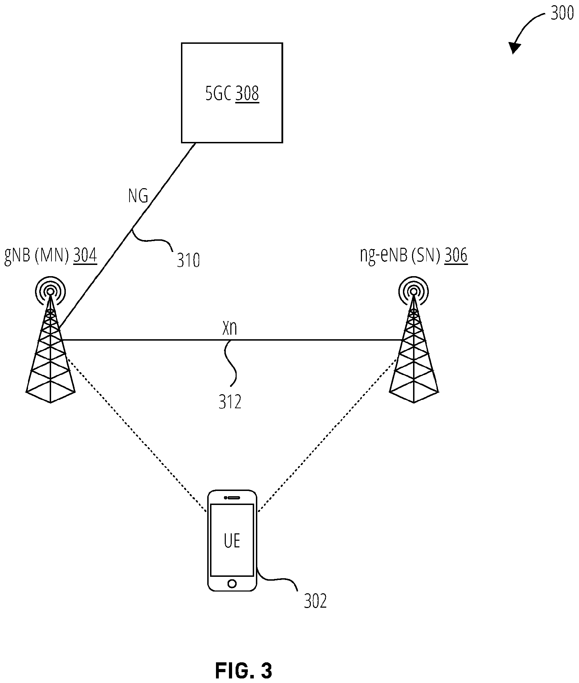

FIG. 3 illustrates an NE-DC architecture 300 according to embodiments herein. By way of example, the NE-DC architecture 300 of FIG. 3 illustrates a UE 302, a gNB (MN) 304, an ng-eNB (SN) 306, and a 5GC 308. In NE-DC, a UE 302 is connected to a gNB (MN) 304 that acts as an MN and a ng-eNB (SN) 306 that acts as an SN. The gNB (MN) 304 is connected to the 5GC 308 via an NG interface 310, and connected to the ng-eNB (SN) 306 via an Xn interface 312.

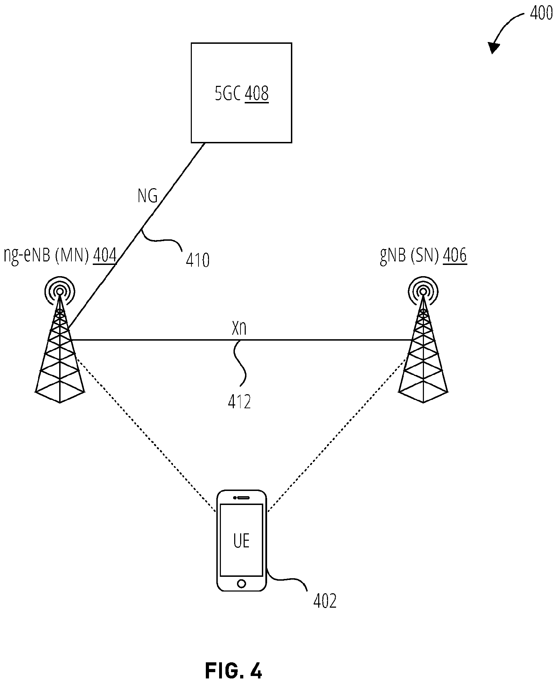

FIG. 4 illustrates an NGEN-DC architecture 400 according to embodiments herein. By way of example, the NGEN-DC architecture 400 of FIG. 4 illustrates a UE 402, a ng-eNB (MN) 404, a gNB (SN) 406, and a 5GC 408. In NGEN-DC, a UE 402 is connected to an ng-eNB (MN) 404 that acts as an MN and a gNB (SN) 406 that acts as an SN. The ng-eNB (MN) 404 is connected to the 5GC 408 via an NG interface 410, and connected to the gNB (SN) 406 via an Xn interface 412.

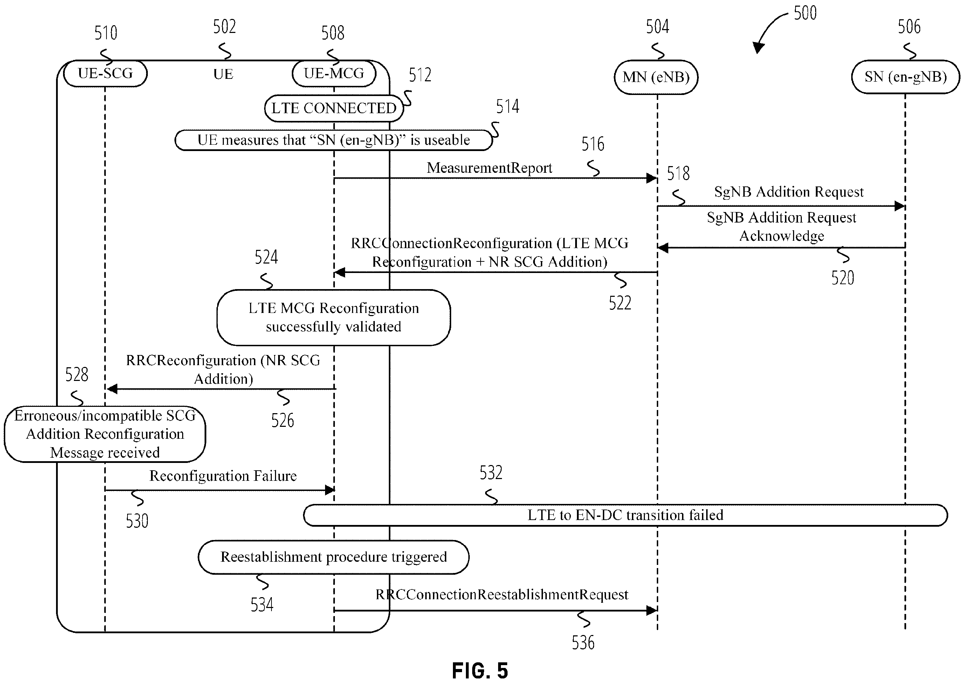

FIG. 5 illustrates a flow diagram 500 showing a failure of both an MCG link and an SCG link at a UE 502 upon the UE 502 attempting to enter an MR-DC mode with an MN 504 and an SN 506, according to an embodiment. The embodiment of FIG. 5 corresponds to this occurrence when a UE attempts to move from one of an LTE mode and an NR mode to an MR-DC mode via SCG link addition. The embodiment of FIG. 5 illustrates specifically an SCG link addition process at the UE 502 that attempts to move the UE 502 from an LTE mode to an EN-DC mode. As illustrated, the UE 502 uses the MN 504, which is an eNB (and which at first may not be considered an MN within an MR-DC context), throughout the process. Attendant to the example of EN-DC, the SN 506 is an en-gNB (as illustrated). The MN 504 and the SN 506 may each be nodes of the same wireless network.

In FIG. 5, the functionality of the UE 502 has been split into the functionalities of the UE-MCG 508, which corresponds to the functions of the UE 502 as they relate to the MN/MCG (or to the relevant (single) node when operating in an NR mode or an LTE mode), and the UE-SCG 510, which corresponds to the functions of the (same) UE 502 as they relate to the SN/SCG (as related to operation of the UE 502 in an MR-DC mode).

As illustrated, the UE-MCG 508 begins in an LTE mode with the MN 504 (which is an eNB) at LTE CONNECTED 512. While in the UE-MCG 508 is in the LTE mode, the UE 502 measures 514 that a strength of one or more cells at the SN 506 is appropriate for use by the UE 502.

A measurement report 516 is then sent by the UE-MCG 508 to the MN 504 that reports that the strength of one or more cells at the SN 506 as measured by the UE 502 is appropriate for use by the UE 502. This measurement report 516 may have been triggered due to this result of the measurement of the SN 506, or it may be merely sent, for example, according to a periodic measurement reporting configuration at the UE 502 for the UE-MCG 508.

In response to the receipt of the measurement report 516 reporting the ability to use the SN 506, the MN 504 sends a secondary gNB addition request 518 to the SN 506. The secondary gNB addition request 518 may include information from the measurement report 516, along with RRC/radio bearer configuration information for the UE 502, capability information for the UE 502, security information for the UE 502, etc. The SN 506 responds with a secondary gNB addition request acknowledgement 520. The secondary gNB addition request acknowledgement 520 may contain SCG configuration information for the SN. This SCG configuration may be provided with the intention that when the UE 502 (eventually) receives it, the UE 502 can apply it in order to enable communication between the UE 502 the SN 506. For example, the SN 506 may intend for the UE 502 to apply the SCG configuration information at the UE-SCG 510 to form an SCG link such that the UE-SCG 510 may accordingly communicate on the SCG of the SN 506 represented by/in the SCG configuration information.

Once the secondary gNB addition request acknowledgement 520 is received at the MN 504, the MN 504 may prepare and send an RRCConnectionReconfiguration message 522 to the UE 502 (such that it is used with the UE-MCG 508, as illustrated). The RRCConnectionReconfiguration message 522 may include the SCG configuration information from the SN 506, as well as MCG configuration information generated by the MN 504. This MCG configuration information may be provided with the intention that when the UE 502 (eventually) receives it, the UE 502 can apply it in order to enable communication between the UE 502 the MN 504. For example, the MN 504 may intend for the UE 502 to apply the MCG configuration information at the UE-MCG 508 to form an MCG link such that the UE-SCG 510 may accordingly communicate on the MCG of the MN 504 represented by/in the MCG configuration information. Note that it is contemplated that in some embodiments according to FIG. 5, the MCG configuration information may match a configuration already being used by the UE 502 to communicate with the MN 504.

Upon receiving the RRCConnectionReconfiguration message 522, the UE 502 then validates 524 the MCG configuration information. For example, the UE-MCG 508 may determine that the MCG configuration information can be applied at the at the UE-MCG 508 to enable communication between the UE 502 and the MN 504 on an MCG link.

The UE-MCG 508 then sends an RRCReconfiguration message 526 to the UE-SCG 510. This RRCReconfiguration message 526 may contain the SCG configuration information from the RRCConnectionReconfiguration message 522 for application at the UE-SCG 510.

The UE 502 (at the UE-SCG 510) then determines 528 that the received SCG configuration information cannot be applied at the UE 502. This may be because the SCG configuration information is erroneous, or incompatible with the UE 502. For example, the UE 502 may determine that the SCG configuration information comprises an information element that cannot be interpreted at the UE, the UE 502 may determine that the SCG configuration information was not received according to a valid security context, the UE 502 may determine that the SCG configuration information is for an SCG configuration that is not supported by the UE, and/or the UE 502 may determine that there is a radio bearer configuration mismatch within the SCG configuration information (e.g., one or more of packet data convergence protocol (PDCP) information, radio link control (RLC), and medium access control (MAC) configuration is not compatible with a UE capability and/or to a previous configuration used at the UE).

In response to determining that the SCG configuration information cannot be applied at the UE 502, the UE-SCG 510 sends a reconfiguration failure message 530 to the UE-MCG 508. The UE-MCG 508 (and thus the UE 502) recognizes the failure to apply the SCG configuration information at the UE-SCG 510 as a condition for recognizing an overall MR-DC transition failure 532. In other words, because of the failure of the SCG link of the MR-DC transition, the UE 502 treats the MCG link with the MN 504 according to the MR-DC transition as failed as well.

In response to the MR-DC transition failure 532, the UE 502 (via the UE-MCG 508) triggers 534 a reestablishment procedure with the MN 504. As part of this reestablishment procedure, an RRCConnectionReestablishmentRequest message 536 is sent to the MN 504.

While the flow diagram 500 of FIG. 5 has illustrated that the UE 502 attempts to move from an LTE mode with the MN 504 that is an eNB to an EN-DC mode with the MN 504 and the SN 506 that is an en-gNB, other possibilities involving SCG link addition are contemplated.

For example, in some cases, the MN 504 may be a gNB and the SN 506 may be a gNB. In this case, the overall pattern of the flow diagram 500 may not change substantially. However, the UE 502 would instead be said to be moving from a NR mode with the MN 504 to an NR-DC mode with the MN 504 and the SN 506.

In other cases, the MN 504 may be a gNB, and the SN 506 may be an ng-eNB. In this case, the overall pattern of the flow diagram 500 may not change substantially. However, the UE 502 would instead be said to be moving from an NR mode to an NE-DC mode.

In other cases, the MN 504 may be an ng-eNB, and the SN 506 may be a gNB. In this case, the overall pattern of the flow diagram 500 may not change substantially. However, the UE 502 would instead be said to be moving from an LTE mode to an NGEN-DC mode.

A change of the MN 504 to a gNB as described in some of the preceding scenarios may impact some particulars of the flow diagram 500. For example, in such a case, the LTE CONNECTED 512 state may be replaced with an NR CONNECTED state, the RRCConnectionReconfiguration message 522 may instead be an RRCReconfiguration message, and the RRCConnectionReestablishmentRequest message 536 may instead be an RRCReestablishmentRequest message.

A change of the SN 506 to an ng-eNB in some of the preceding scenarios may impact some particulars of the flow diagram 500. For example, in such a case, the RRCReconfiguration message 526 may instead be an RRCConnectionReconfiguration message.

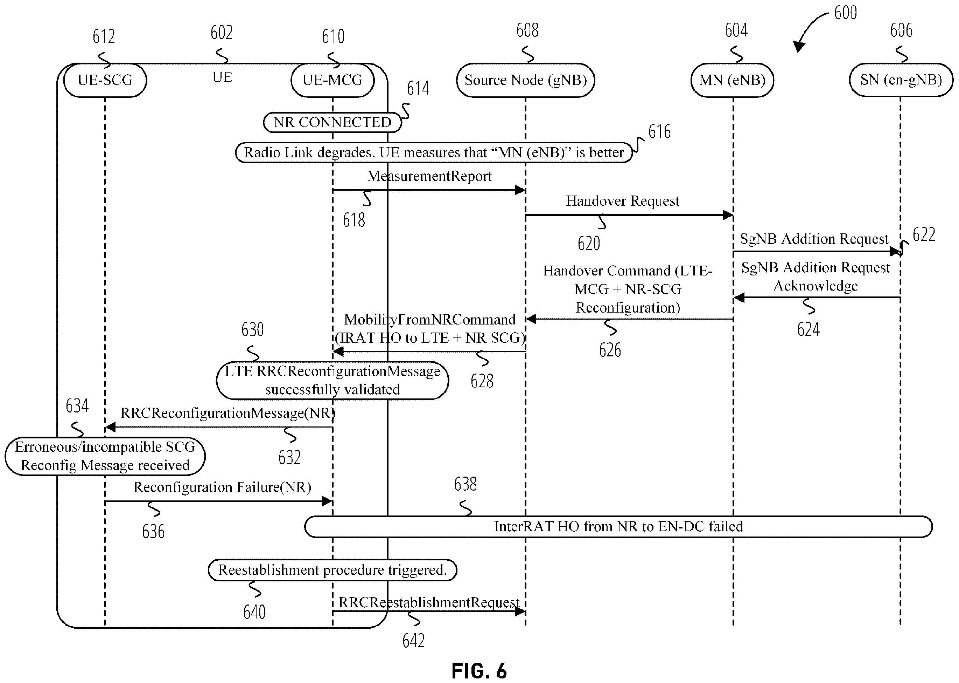

FIG. 6 illustrates a flow diagram 600 showing a failure of both an MCG link and an SCG link at a UE 602 upon the UE 602 attempting to enter an MR-DC mode with an MN 604 and an SN 606, according to an embodiment. The embodiment of FIG. 6 corresponds to this occurrence when a UE attempts to perform inter-RAT handover from one of an LTE mode or an NR mode to an MR-DC mode. The embodiment of FIG. 6 illustrates specifically an attempt to perform inter-RAT handover of the UE 602 from a NR mode to an EN-DC mode. The inter-RAT nature of this handover may be determined due to UE 602 moving from an NR mode with the source node 608 (which is a gNB, as illustrated) to an MR-DC mode (EN-DC) that uses the MN 604 (which is an eNB, as illustrated). Attendant to the use of EN-DC, the SN 606 is an en-gNB (as illustrated). The MN 604, the SN 606, and the source node 608 may each be nodes of the same wireless network.

In FIG. 6, the functionality of the UE 602 has been split into the functionalities of the UE-MCG 610, which corresponds to the functions of the UE 602 as they relate to the MN/MCG (or to the relevant (single) node when operating in an NR mode or an LTE mode), and the UE-SCG 612, which corresponds to the functions of the (same) UE 602 as they relate to the SN/SCG (as related to operation of the UE 602 in an MR-DC mode).

As illustrated, the UE-MCG 610 begins in an NR mode with a source node 608 (which is a gNB) at NR CONNECTED 614. Then, UE-MCG 610 and the source node 608 experience radio link degradation 616, and the UE 602 accordingly measures that one or more cells at the MN 604 is better than the source node 608.

A measurement report 618 is then sent by the UE-MCG 610 to the source node 608 that reports the degraded nation of the radio link between the UE-MCG 610 and the source node 608. The measurement report 618 may further indicate that the strength of the one or more cells at the MN 604 as measured by the UE 602 is appropriate for use by the UE 602. This measurement report 618 may have been triggered due to the radio link degradation 616, or it may be merely sent sometime after the radio link degradation 616 (for example, according to a periodic measurement reporting configuration at the UE 602 for the UE-MCG 610).

In response to the receipt of the measurement report 618 showing the radio link degradation 616, the source node 608 sends a handover request 620 to the MN 604. The MN 604 may have been selected as the target of the handover request 620 based on the reporting of the strength of one or more cells of the MN 604 in the measurement report 618, as described above.

In response to the receipt of the handover request 620, the MN 604 sends a secondary gNB addition request 622 to the SN 606. In some embodiments, information from the measurement report 618 may have been included in the handover request 620 from the source node 608, enabling the MN 604 to determine to use the SN 606 and to accordingly send the secondary gNB addition request 622 to the SN 606. The secondary gNB addition request 622 may also include the information from the measurement report 618 (in, e.g., a CG-ConfigInfo information element) so that the SN 606 can make determinations regarding an appropriate SCG configuration for use with the UE 602. The SN 606 responds with a secondary gNB addition request acknowledgement 624. The secondary gNB addition request acknowledgement 624 may contain SCG configuration information for the SN. This SCG configuration may be provided with the intention that when the UE 602 (eventually) receives it, the UE 602 can apply it in order to enable communication between the UE 602 the SN 606. For example, the SN 606 may intend for the UE 602 to apply the SCG configuration information at the UE-SCG 612 to form an SCG link such that the UE-SCG 612 may accordingly communicate on the SCG of the SN 606 represented by/in the SCG configuration information.

Once the secondary gNB addition request acknowledgement 624 is received at the MN 604, the MN 604 may prepare and send a handover command 626 to the source node 608. This handover command 626 may include the SCG configuration information from the secondary gNB addition request acknowledgement 624, as well as MCG configuration information generated by the MN 604. This MCG configuration information may be provided with the intention that when the UE 602 (eventually) receives it, the UE 602 can apply it in order to enable communication between the UE 602 the MN 604. For example, the MN 604 may intend for the UE 602 to apply the MCG configuration information at the UE-MCG 610 to form an MCG link such that the UE-MCG 610 may accordingly communicate on the MCG of the MN 604 represented by/in the MCG configuration information. The SCG configuration information and the MCG configuration information illustrated may incorporated into individual RRC messages that are sent as part of the handover command 626.

Once the handover command 626 is received at the source node 608, the source node 608 may prepare and send a MobilityFromNRCommand 628 to the UE 602 (and be used with the UE-MCG 610). This MobilityFromNRCommand 628 may include instructions for inter-RAT handover from NR at the source node 608 to LTE at the MN 604, and may also include the SCG configuration information for NR use with the SN 606, as illustrated. For example, the MobilityFromNRCommand 628 may include a first RRC message containing the MCG configuration information for the MN 604. In the flow diagram 600, because the MN 604 is an eNB, this first RRC message may correspondingly be an RRCConnectionReconfiguration message. This first RRC message may be, for example, an RRC message for the MCG configuration information that was received in the handover command 626. Further, the MobilityFromNRCommand 628 may further include a second RRC message containing the SCG configuration information for the SN 606. In the flow diagram 600, because the SN 606 is an en-gNB, this RRC message may correspondingly be an RRCReconfiguration message. This second RRC message may be, for example, an RRC message for the SCG configuration information that was received in the handover command 626.

Upon receiving the MobilityFromNRCommand 628, the UE 602 then validates 630 the MCG configuration information. For example, the UE-MCG 610 may determine that the MCG configuration information can be applied at the UE-MCG 610 to enable communication between the UE 602 and the MN 604 on an MCG link.

The UE-MCG 610 then sends an RRCReconfiguration message 632 to the UE-SCG 612. This RRCReconfiguration message 632 may contain the SCG configuration information for application at the UE-SCG 612. This RRCReconfiguration message 632 may be the RRC message for the SCG configuration information forwarded through the handover command 626 and the MobilityFromNRCommand 628, as described above.

The UE 602 (at the UE-SCG 612) then determines 634 that the received SCG configuration information cannot be applied at the UE 602. This may be because the SCG configuration information is erroneous, or incompatible with the UE 602, with possibilities for such conditions including those described previously.

In response to determining that the SCG configuration information cannot be applied at the UE 602, the UE-SCG 612 sends a reconfiguration failure message 636 to the UE-MCG 610. The UE-MCG 610 (and thus the UE 602) recognizes the failure to apply the SCG configuration information at the UE-SCG 612 as a condition for recognizing an overall MR-DC transition failure 638. In other words, because of the failure of the SCG link of the MR-DC transition, the UE 602 treats the MCG link with the MN 604 according to the MR-DC transition as failed as well.

In response to the MR-DC transition failure 638, the UE 602 (via the UE-MCG 610) triggers 640 a reestablishment procedure with the MN 604. As part of this reestablishment procedure, an RRCReestablishmentRequest message 642 is sent to the source node 608.

While the flow diagram 600 of FIG. 6 has illustrated that the UE 602 attempts to move (via inter-RAT handover) from an NR mode with the source node 608 that is a gNB to an EN-DC mode with the MN 604 that is an eNB and the SN 606 that is an en-gNB, other possibilities involving inter-RAT handover from one of an LTE mode or an NR mode to an MR-DC mode are contemplated.

For example, in one case, the source node 608 may be a gNB, the MN 604 may be an ng-eNB, and the SN 606 may be a gNB. In this case, the overall pattern of the flow diagram 600 may not change substantially. However, the UE 602 would instead be said to be performing inter-RAT handover from an NR mode with the source node 608 to an NGEN-DC mode with the MN 604 and the SN 606.

In another case, the source node 608 may be an eNB, and the MN 604 and the SN 606 may both be gNBs. In this case, the overall pattern of the flow diagram 600 may not change substantially. However, the UE 602 would instead be said to be inter-RAT handover from an LTE mode with the source node 608 to an NR-DC mode with the MN 604 and the SN 606.

In another case, the source node 608 may be an eNB, the MN 604 may be a gNB, and the SN 606 may be an ng-eNB. In this case, the overall pattern of the flow diagram 600 may not change substantially. However, the UE 602 would instead be said to be inter-RAT handover from an LTE mode with the source node 608 to an NE-DC mode with the MN 604 and the SN 606.

A change of the source node 608 to an eNB as described in some of the preceding scenarios may impact some particulars of the flow diagram 600. For example, in such a case the NR CONNECTED 614 state may be replaced with an LTE CONNECTED state. Further, the MobilityFromNRCommand 628 may be replaced with a MobilityFromEUTRACommand (that includes instructions for inter-RAT handover from LTE at the source node 608 rather than from NR). Finally, the RRCReestablishmentRequest message 642 may instead be an RRCConnectionReestablishmentRequest message.

A change of the MN 604 to a gNB as described in some of the preceding scenarios may impact some particulars of the flow diagram 600. For example, message names and amounts may change as opposed the illustrated use of the handover request 620, the secondary gNB addition request 622, the secondary gNB addition request acknowledgement 624, and the handover command 626. However, the general principle of transporting (at least) the information described in these messages would remain the same.

A change of the SN 606 to an ng-eNB as described in some preceding scenarios may impact some particulars of the flow diagram 600. For example, the RRCReconfiguration message 632 may instead be an RRCConnectionReconfiguration message.

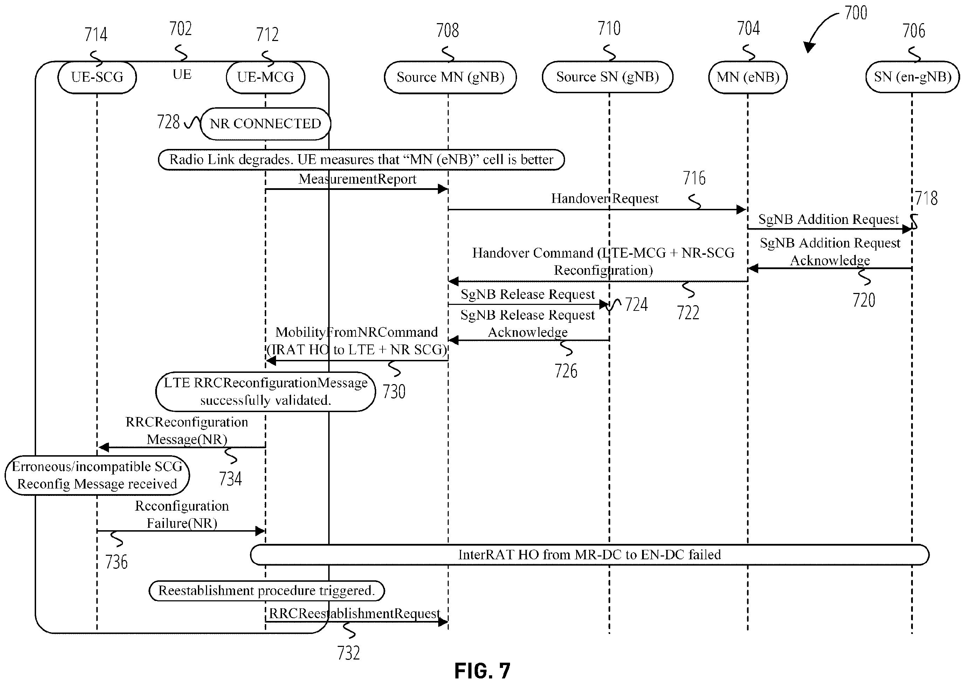

FIG. 7 illustrates a flow diagram 700 showing a failure of both an MCG link and an SCG link at a UE 702 upon the UE 702 attempting to enter an MR-DC mode with an MN 704 and an SN 706, according to an embodiment. The embodiment of FIG. 7 corresponds to this occurrence when a UE attempts to perform inter-RAT handover from a first MR-DC mode to a second MR-DC mode. The embodiment of FIG. 7 illustrates specifically an attempt to perform handover of the UE 702 from an NR-DC mode to an EN-DC mode. The inter-RAT nature of this handover may be determined due to UE 702 moving from an MR-DC mode that uses the source MN node 708 (which is a gNB, as illustrated) to an EN-DC mode that uses the MN 704 (which is an eNB, as illustrated). Corresponding to the illustrated MR-DC types, the source SN node 710 is a gNB (as illustrated) and the SN 706 is an en-gNB (as illustrated). The MN 704, the SN 706, the source MN node 708, and the source SN node 710 may each be nodes of the same wireless network.

The flow diagram 700 largely tracks the case of the flow diagram 600, with the source MN node 708 performing analogous functions as those described of source node 608. Differences include that, attendant to the initial MR-DC mode of the UE 702 (rather than just a simple NR mode as in the flow diagram 600), after the receipt of the handover command 722 at the source MN node 708, the source MN node 708 sends a secondary gNB release request 724 to the source SN node 710, which responds with the secondary gNB release request acknowledgement 726, thereby accounting for the release of the source SN node 710 within the initial MR-DC mode used by the UE-SCG 714 within the flow diagram 700.

While the flow diagram 700 of FIG. 7 has illustrated that the UE 702 moves (via inter-RAT handover) from an NR-DC mode with the source MN node 708 that is a gNB and the source SN node 710 that is a gNB to an EN-DC mode with the MN 704 that is an eNB and the SN 706 that is an en-gNB, other possibilities involving inter-RAT handover from one MR-DC mode to another MR-DC mode are contemplated.

For example, in one case, the source MN node 708 may be a gNB, the source SN node 710 may be a gNB, the MN 704 may be an ng-eNB, and the SN 706 may be a gNB. In this case, the overall pattern of the flow diagram 600 may not change substantially. However, the UE 702 would instead be said to be performing inter-RAT handover from an NR-DC mode with the source MN node 708 and the source SN node 710 to an NGEN-DC mode with the MN 704 and the SN 706.

In another case, the source MN node 708 may be an eNB, the source SN node 710 may be an en-gNB, the MN 704 may be a gNB, and the SN 706 may be a gNB. In this case, the overall pattern of the flow diagram 700 may not change substantially. However, the UE 702 would instead be said to be performing inter-RAT handover from an EN-DC mode with the source MN node 708 and the source SN node 710 to an NR-DC mode with the MN 704 and the SN 706.

In another case, the source MN node 708 may be an eNB, the source SN node 710 may be an en-gNB, the MN 704 may be a gNB, and the SN 706 may be a ng-eNB. In this case, the overall pattern of the flow diagram 700 may not change substantially. However, the UE 702 would instead be said to be performing inter-RAT handover from an EN-DC mode with the source MN node 708 and the source SN node 710 to an NE-DC mode with the MN 704 and the SN 706.

In another case, the source MN node 708 may be a gNB, the source SN node 710 may be an ng-eNB, the MN 704 may be an eNB, and the SN 706 may be an en-gNB. In this case, the overall pattern of the flow diagram 700 may not change substantially. However, the UE 702 would instead be said to be performing inter-RAT handover from an NE-DC mode with the source MN node 708 and the source SN node 710 to an EN-DC mode with the MN 704 and the SN 706.

In another case, the source MN node 708 may be a gNB, the source SN node 710 may be an ng-eNB, the MN 704 may be a ng-eNB, and the SN 706 may be a gNB. In this case, the overall pattern of the flow diagram 700 may not change substantially. However, the UE 702 would instead be said to be performing inter-RAT handover from an NE-DC mode with the source MN node 708 and the source SN node 710 to an NGEN-DC mode with the MN 704 and the SN 706.

In another case, the source MN node 708 may be a ng-eNB, the source SN node 710 may be a gNB, the MN 704 may be an eNB, and the SN 706 may be an en-gNB. In this case, the overall pattern of the flow diagram 700 may not change substantially. However, the UE 702 would instead be said to be performing inter-RAT handover from an NGEN-DC mode with the source MN node 708 and the source SN node 710 to an NE-DC mode with the MN 704 and the SN 706.

In another case, the source MN node 708 may be a ng-eNB, the source SN node 710 may be a gNB, the MN 704 may be a gNB, and the SN 706 may be a gNB. In this case, the overall pattern of the flow diagram 700 may not change substantially. However, the UE 702 would instead be said to be performing inter-RAT handover from an NGEN-DC mode with the source MN node 708 and the source SN node 710 to an NR-DC mode with the MN 704 and the SN 706.

A change of the source MN node 708 to an eNB or an ng-eNB as described in some of the preceding scenarios may impact some particulars of the flow diagram 700. For example, in such a case the NR CONNECTED 728 state may be replaced with an LTE CONNECTED state. Further, the MobilityFromNRCommand 730 may be replaced with a MobilityFromEUTRACommand (that includes instructions for inter-RAT handover from LTE at the source MN node 708 rather than from NR). Finally, the RRCReestablishmentRequest message 732 may instead be an RRCConnectionReestablishmentRequest message.

A change of the source SN node 710 to an ng-eNB as described in some of the preceding scenarios may impact some particulars of the flow diagram 700. For example, in such a case, the secondary gNB release request 724 may instead be a secondary eNB release request, and the secondary gNB release request acknowledgement 726 may instead be a secondary eNB release request acknowledgement.

A change of the MN 704 to a gNB as described in some of the preceding scenarios may impact some particulars of the flow diagram 700. For example, message names and amounts may change as opposed the illustrated use of the handover request 716, the secondary gNB addition request 718, the secondary gNB addition request acknowledgement 720, and the handover command 722. However, the general principle of transporting (at least) the information described in these messages would remain the same.

A change of the SN 706 to an ng-eNB as described in some preceding scenarios may impact some particulars of the flow diagram 700. For example, the RRCReconfiguration message 734 may instead be an RRCConnectionReconfiguration message.

Among other aspects, the embodiments described in relation to FIG. 5 through FIG. 7 illustrate cases where a UE determines that an SCG configuration information cannot be applied and determines in response that an overall MR-DC transition failure has occurred. Further, as shown in FIG. 5 through FIG. 7, this causes the UE to attempt a reestablishment procedure (whether LTE or NR, as applicable) relative to a node to which it was connected prior to attempting to move to the (new) MR-DC mode.

In at least some of these embodiments, this reestablishment procedure with the MN may at least temporarily interrupt the connection between the UE and the network, causing reduced user performance. Further, in some scenarios, it may be that the attempted move to the (new) MR-DC mode may have been triggered in the first instance (at least in part) due to a low signal strength on the prior connected node with which the UE is now attempting to perform the reestablishment procedure. Accordingly, the ultimate success of the reestablishment procedure may not be certain, and/or the quality of any reestablished connection to this prior connected node may in any case be poor.

The embodiments described in relation to FIG. 5 through FIG. 7 also illustrate that in each case, the attempt to more to MR-DC provided an MCG configuration for an MN that was validated at the UE. Accordingly, to avoid the problems attendant to the use of the reestablishment procedure illustrated in FIG. 5 through FIG. 7, in cases where the SCG configuration of the attempted MR-DC mode has a problem but the MCG configuration does not, a UE may be configured to perform signaling to the network to allow the UE to communicate with the network on the MN using the received MCG configuration of the attempted MR-DC (rather than performing the reestablishment procedure with the prior connected node).

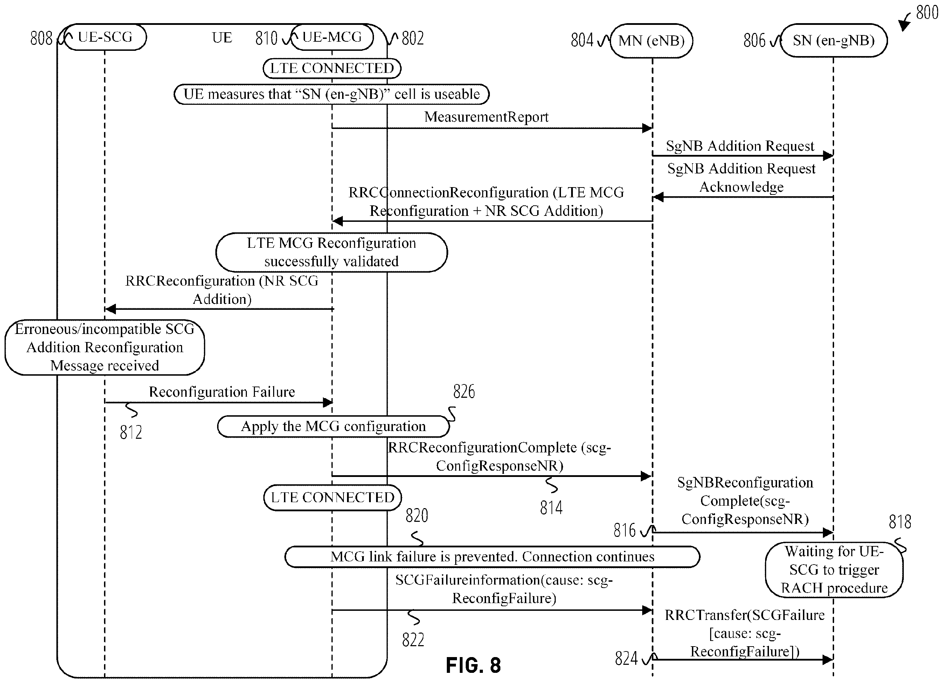

FIG. 8 illustrates a flow diagram 800 showing a manner of preventing an MCG link failure at a UE 802 due to an SCG link failure upon the UE 802 attempting to enter an MR-DC mode with an MN 804 and an SN 806, according to an embodiment. The embodiment of FIG. 8 may represent modifications to the embodiment illustrated in FIG. 5. Accordingly, the embodiment of FIG. 8, like FIG. 5, corresponds to this occurrence when a UE attempts to move from one of an LTE mode and an NR mode to an MR-DC mode via SCG link addition, with FIG. 8 illustrating specifically an SCG link addition process at the UE 802 attempting to move the UE 802 from an LTE mode to an EN-DC mode. As illustrated, the UE 802 uses the MN 804, which is an eNB (and which at first may not be considered an MN within an MR-DC context), throughout the process. Attendant to the example of EN-DC, the SN 806 is an en-gNB (as illustrated). The MN 804 and the SN 806 may each be nodes of the same wireless network.

The flow diagram 800 may track the flow diagram 500 of FIG. 5 up through the sending of the reconfiguration failure message 812 (corresponding to the reconfiguration failure message 530 of FIG. 5) to the UE-MCG 810. However, rather than responding to the reconfiguration failure message 812 as a condition for recognizing an overall MR-DC transition failure, the UE 802 instead responds by applying 826 the MCG configuration information to the UE 802 (e.g., for use at the UE-MCG 810) such that subsequent communications from the UE 802 to the MN 804 occur on the MCG corresponding to the applied MCG configuration information. In the case that the MCG configuration information indicates for the same configuration that was previously used to communicate with the MN 804, the applying 826 includes, for example, the UE determining to continue to communicate with the MN 804 according to such MCG configuration information.

The UE 802 (via the UE-SCG 808) then sends an RRCConnectionReconfigurationComplete message 814 to the MN 804. The RRCConnectionReconfigurationComplete message 814 may itself include an scg-ConfigResponseNR message. The existence of/inclusion of the scg-ConfigResponse message in the RRCConnectionReconfigurationComplete message 814 may indicate (albeit counterfactually) that the UE-SCG 808 has been configured with the provided SCG configuration information for communication with the SN 806 on the SCG based on the SCG configuration information. The MN 804 then sends a corresponding SgNBReconfigurationComplete message 816 having the scg-ConfigResponseNR message to the SN 806. In response, the SN 806 may understand (albeit incorrectly) that the UE-SCG 808 has been configured with the provided SCG configuration information for communication with the SN 806 on the SCG based on the SCG configuration information. The SN 806 accordingly waits 818 for the UE-SCG 808 to trigger a random access channel (RACH) procedure with the SN 806 according to the SCG corresponding to the SCG configuration information.

In this manner, the MCG link failure (which would have occurred had the UE-MCG 810 instead sent the MN 804 a reconfiguration failure message as in the reconfiguration failure message 530 of FIG. 5) is prevented 820, and the UE can proceed to communicate with the network on the MCG link with the MN 804 according to the received MCG configuration information. In this manner, communication performance between the UE 802 and the network (via at least the MN 804) may remain acceptable, without the interruptions that might otherwise occur if a reestablishment procedure were instead used, as in FIG. 5 above.

In order to correct for the fact that the SCG configuration information was not actually useable/applied at the UE 802, after sending RRCConnectionReconfigurationComplete message 814 to the MN 804, the UE 802 may then send (via the UE-MCG 810), an SCGFailureInformation message 822 having an scg-ReconfigFailure indication. This may indicate to the MN 804 that the SCG configuration information cannot be applied at the UE 802. In response, the MN 804 sends the SN 806 an RRCTransfer message 824 containing an SCGFailure message having the scg-ReconfigFailure indication to the SN 806, indicating to the SN 806 that the SCG configuration information cannot be applied at the UE. This may, for example, inform the network not to expect communications by the UE 802 with the SN 806 on the SCG and/or allow the network to provide the UE 802 with new SCG configuration information in a second attempt to set up communications between the UE 802 and the SN 806, as appropriate. In response to receiving the SCGFailure message of the RRCTransfer message 824, the SN 806 may discard the SCG configuration information and consider any SCG link with the UE 802 corresponding to the SCG configuration information as terminated.

Similarly to the flow diagram 500 for FIG. 5, while the flow diagram 800 of FIG. 8 has illustrated that the UE 802 is attempting to move from an LTE mode with the MN 804 that is an eNB to an EN-DC mode with the MN 804 and the SN 806 that is an en-gNB, other possibilities involving SCG link addition are contemplated (e.g., as described in relation to FIG. 5).

A change of the MN 804 to a gNB in some such scenarios may implicate the same changes to particulars of the flow diagram 800 as were described in relation to the flow diagram 500 of FIG. 5. Further, specific to the flow diagram 800, an MN 804 as an gNB may imply the use of an RRCReconfigurationComplete message in place of the RRCConnectionReconfigurationComplete message 814.

A change of the SN 806 to an ng-eNB in some such scenarios may implicate the same changes to particulars of the flow diagram 800 as were described in relation to the flow diagram 500 of FIG. 5. Further, specific to the flow diagram 800, an SN 806 as an ng-eNB may imply the use of an SeNBReconfigurationComplete message in place of the SgNBReconfigurationComplete message 816. Further, the scg-ConfigResponseNR used in such a message (and in the RRCConnectionReconfigurationComplete message 814 or any substitute message) may instead be an EUTRA-SCG-Response message.

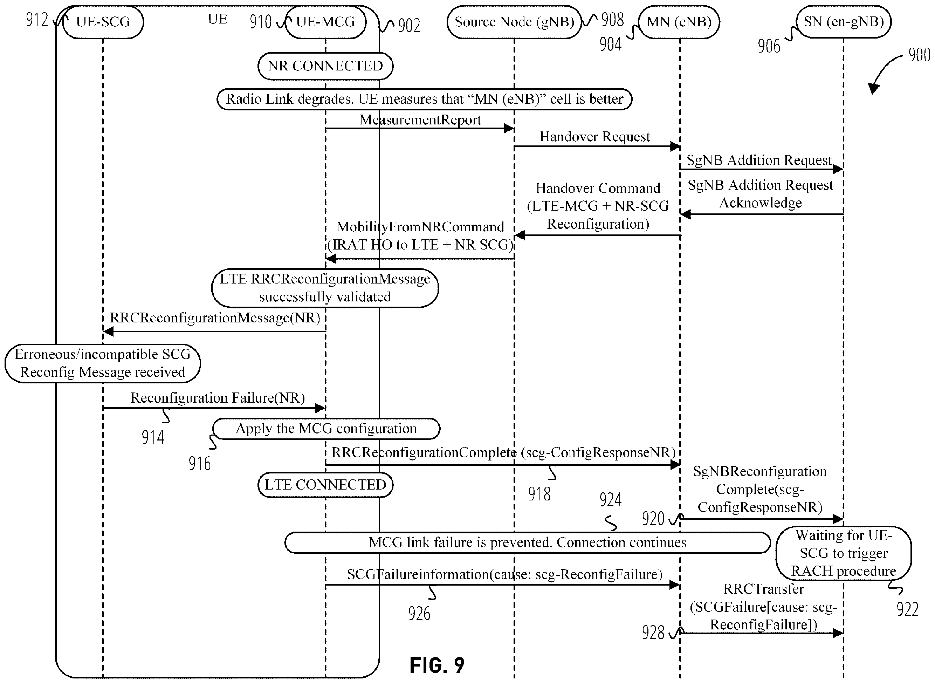

FIG. 9 illustrates a flow diagram 900 showing a manner of preventing an MCG link failure at a UE 902 due to an SCG link failure upon the UE 902 attempting to enter an MR-DC mode with an MN 904 and an SN 906, according to an embodiment. The embodiment of FIG. 9 may represent modifications to the embodiment illustrated in FIG. 6. Accordingly, the embodiment of FIG. 9, like FIG. 6, corresponds to this occurrence when a UE attempts to perform inter-RAT handover from one of an LTE mode or an NR mode to an MR-DC mode, with FIG. 9 illustrating specifically an attempt to perform inter-RAT handover of the UE 602 from a NR mode to an EN-DC mode. The inter-RAT nature of this handover may be determined due to UE 902 moving from an NR mode with the source node 908 (which is a gNB, as illustrated) to an MR-DC mode (EN-DC) that uses an MN 904 (that is an eNB, as illustrated). Attendant to the use of EN-DC, the SN 906 is an en-gNB (as illustrated). The MN 904, the SN 906, and the source node 908 may each be nodes of the same wireless network.

The flow diagram 900 may track the flow diagram 600 of FIG. 6 up through the sending of the reconfiguration failure message 914 (corresponding to the reconfiguration failure message 636 of FIG. 6) to the UE-MCG 910. However, rather than responding to the reconfiguration failure message 914 as a condition for recognizing an overall MR-DC transition failure, the UE 902 instead responds by applying 916 the MCG configuration information to the UE 902 (e.g., for use at the UE-MCG 910) such that subsequent communications from the UE 902 to the MN 904 occur on the MCG corresponding to the applied MCG configuration information.

The UE 902 then sends (via the UE-MCG 910) an RRCConnectionReconfigurationComplete message 918 to the MN 904. The RRCConnectionReconfigurationComplete message 918 may itself include an scg-ConfigResponseNR message. The existence of/inclusion of the scg-ConfigResponse message in the RRCConnectionReconfigurationComplete message 918 may indicate (albeit counterfactually) that the UE-SCG 912 has been configured with the provided SCG configuration information for communication with the SN 906 on the SCG based on the SCG configuration information. The MN 904 then sends a corresponding SgNBReconfigurationComplete message 920 having the scg-ConfigResponseNR to the SN 906. In response, the SN 806 may understand (albeit incorrectly) that the UE-SCG 912 has been configured with the provided SCG configuration information for communication with the SN 906 on the SCG based on the SCG configuration information. The SN 906 accordingly waits 922 for the UE-SCG 912 to trigger a random access channel (RACH) procedure with the SN 906 according to the SCG corresponding to the SCG configuration information.

In this manner, the MCG link failure (which would have occurred had the UE-MCG 910 instead sent the MN 904 a reconfiguration failure message as in the reconfiguration failure message 636 of FIG. 6) is prevented 924, and the UE can proceed to communicate with the network on the MCG link with the MN 904 according to the received MCG configuration information. In this manner, communication performance between the UE 902 and the network (via at least the MN 904) may remain acceptable, without the interruptions and/or reestablishment back to a prior connected node with a relatively weaker signal strength that might otherwise occur if a reestablishment procedure with the prior connected node were instead used, as in FIG. 6 above.

In order to correct for the fact that the SCG configuration information was not actually useable/applied at the UE 902, after sending RRCConnectionReconfigurationComplete message 918 to the MN 904, the UE 902 may then send (via the UE-MCG 910), an SCGFailureInformation message 926 having an scg-ReconfigFailure indication. This may indicate to the MN 904 that the SCG configuration information cannot be applied at the UE 902. In response, the MN 904 sends the SN 906 an RRCTransfer message 928 containing an SCGFailure message having the scg-ReconfigFailure indication to the SN 906, indicating to the SN 806 that the SCG configuration information cannot be applied at the UE. This may, for example, inform the network not to expect communications by the UE 902 with the SN 906 on the SCG and/or allow the network to provide the UE 902 with new SCG configuration information in a second attempt to set up communications between the UE 902 and the SN 906, as appropriate. In response to receiving the SCGFailure message of the RRCTransfer message 928, the SN 906 may discard the SCG configuration information and consider any SCG link with the UE 902 corresponding to the SCG configuration information as terminated.

Similarly to the flow diagram 600 for FIG. 6, while the flow diagram 900 of FIG. 9 has illustrated that the UE 902 attempts to move (via inter-RAT handover) from an NR mode with the source node 908 that is a gNB to an EN-DC mode with the MN 904 that is an eNB and the SN 906 that is an en-gNB, other possibilities involving inter-RAT handover from one of an LTE mode or an NR mode to an MR-DC mode are contemplated (e.g., as described in relation to FIG. 6).

A change of the source node 908 to an eNB in some such scenarios may implicate the same changes to particulars of the flow diagram 900 as were described in relation to the flow diagram 600 of FIG. 6.

A change of the MN 604 to a gNB in some such scenarios may implicate the same changes to particulars of the flow diagram 900 as were described in relation to the flow diagram 600 of FIG. 6. Further, specific to the flow diagram 900, an MN 904 as an gNB may imply the use of an RRCReconfigurationComplete message in place of the RRCConnectionReconfigurationComplete message 918.

A change of the SN 906 to an ng-eNB in some such scenarios may implicate the same changes to particulars of the flow diagram 900 as were described in relation to the flow diagram 600 of FIG. 6. Further, specific to the flow diagram 900, an SN 906 as an ng-eNB may imply the use of an SeNBReconfigurationComplete message in place of the SgNBReconfigurationComplete message 920. Further, the scg-ConfigResponseNR used in such a message (and in the RRCConnectionReconfigurationComplete message 918 or any substitute message) may instead be an EUTRA-SCG-Response message.

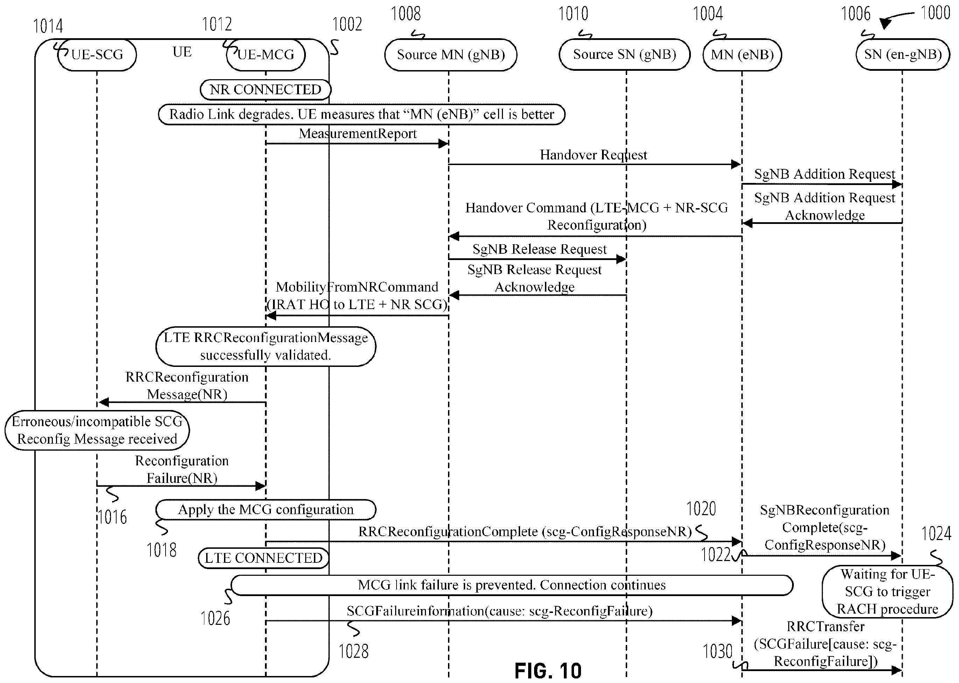

FIG. 10 illustrates a flow diagram 1000 showing a manner of preventing an MCG link failure at a UE 1002 due to an SCG link failure upon the UE 1002 attempting to enter an MR-DC mode with an MN 1004 and an SN 1006, according to an embodiment. The embodiment of FIG. 10 may represent modifications to the embodiment illustrated in FIG. 7. Accordingly, the embodiment of FIG. 10, like FIG. 7, corresponds to this occurrence when a UE attempts to perform inter-RAT handover from a first MR-DC mode to a second MR-DC mode, with FIG. 10 illustrating specifically an attempt to perform inter-RAT handover of the UE 1002 from a NR-DC mode to an EN-DC mode. The inter-RAT nature of this handover may be determined due to UE 1002 moving from an MR-DC mode that uses the source MN node 1008 (which is a gNB, as illustrated) to an EN-DC mode that uses the MN 1004 (which is an eNB, as illustrated). Corresponding to the illustrated MR-DC types, the source SN node 1010 is a gNB (as illustrated) and the SN 1006 is an en-gNB (as illustrated). The MN 1004, the SN 1006, the source MN node 1008, and the source SN node 1010 may each be nodes of the same wireless network.

The flow diagram 1000 may track the flow diagram 700 of FIG. 7 up through the sending of the reconfiguration failure message 1016 (corresponding to the reconfiguration failure message 736 of FIG. 7) to the UE-MCG 1012. However, rather than responding to the reconfiguration failure message 1016 as a condition for recognizing an overall MR-DC transition failure, the UE 1002 instead responds by applying 1018 the MCG configuration information to the UE 1002 (e.g., for use at the UE-MCG 1012) such that subsequent communications from the UE 1002 to the MN 1004 occur on the MCG corresponding to the applied MCG configuration information.

The UE 1002 then sends (via the UE-MCG 1012) an RRCConnectionReconfigurationComplete message 1020 to the MN 1004. The RRCConnectionReconfigurationComplete message 1020 may itself include an scg-ConfigResponseNR message. The existence of/inclusion of the scg-ConfigResponse message in the RRCConnectionReconfigurationComplete message 1020 may indicate (albeit counterfactually) that the UE-SCG 1014 has been configured with the provided SCG configuration information for communication with the SN 1006 on the SCG based on the SCG configuration information. The MN 1004 then sends a corresponding SgNBReconfigurationComplete message 1022 having the scg-ConfigResponseNR to the SN 1006. In response, the SN 1006 may understand (albeit incorrectly) that the UE-SCG 1014 has been configured with the provided SCG configuration information for communication with the SN 1006 on the SCG based on the SCG configuration information. The SN 1006 accordingly waits 1024 for the UE-SCG 1014 to trigger a random access channel (RACH) procedure with the SN 1006 according to the SCG corresponding to the SCG configuration information.

In this manner, the MCG link failure (which would have occurred had the UE-MCG 1012 instead sent the MN 1004 a reconfiguration failure message as in the reconfiguration failure message 736 of FIG. 7) is prevented 1026, and the UE can proceed to communicate with the network on the MCG link with the MN 1004 according to the received MCG configuration information. In this manner, communication performance between the UE 1002 and the network (via at least the MN 1004) may remain acceptable, without the interruptions and/or reestablishment back to a prior connected node with a relatively weaker signal strength that might otherwise occur if a reestablishment procedure with the prior connected node were instead used, as in FIG. 7 above.

In order to correct for the fact that the SCG configuration information was not actually used/applied at the UE 1002, after sending RRCConnectionReconfigurationComplete message 1020 to the MN 1004, the UE 1002 may then send (via the UE-MCG 1012), an SCGFailureInformation message 1028 having an scg-ReconfigFailure indication. This may indicate to the MN 1004 that the SCG configuration information cannot be applied at the UE 1002. In response, the MN 1004 sends the SN 1006 an RRCTransfer message 1030 containing an SCGFailure message having the scg-ReconfigFailure indication, indicating to the SN 1006 that the SCG configuration information cannot be applied at the UE. This may, for example, inform the network not to expect communications by the UE 1002 with the SN 1006 on the SCG and/or allow the network to provide the UE 1002 with new SCG configuration information in a second attempt to set up communications between the UE 1002 and the SN 1006, as appropriate. In response to receiving the SCGFailure message of the RRCTransfer message 1030, the SN 1006 may discard the SCG configuration information and consider any SCG link with the UE 1002 corresponding to the SCG configuration information as terminated.

Similarly to the flow diagram 700 for FIG. 7, while the flow diagram 1000 of FIG. 10 has illustrated that the UE 1002 moves (via inter-RAT handover) from an NR-DC mode with the source MN node 1008 that is a gNB and the source SN node 1010 that is a gNB to an EN-DC mode with the MN 1004 that is an eNB and the SN 1006 that is an en-gNB, other possibilities involving inter-RAT handover from one MR-DC mode to another MR-DC mode are contemplated (e.g., as described in relation to FIG. 7).

A change of the source MN node 1008 to an eNB or an ng-eNB in some such scenarios may implicate the same changes to particulars of the flow diagram 1000 as were described in relation to the flow diagram 700 of FIG. 7.

A change of the source SN node 1010 to an ng-eNB in some such scenarios may implicate the same changes to particulars of the flow diagram 1000 as were described in relation to the flow diagram 700 of FIG. 7.

A change of the MN 1004 to a gNB in some such scenarios may implicate the same changes to particulars of the flow diagram 1000 as were described in relation to the flow diagram 700 of FIG. 7. Further, specific to the flow diagram 1000, an MN 1004 as an gNB may imply the use of an RRCReconfigurationComplete message in place of the RRCConnectionReconfigurationComplete message 1020.

A change of the SN 1006 to an ng-eNB in some such scenarios may implicate the same changes to particulars of the flow diagram 1000 as were described in relation to the flow diagram 700 of FIG. 7. Further, specific to the flow diagram 1000, an SN 1006 as an ng-eNB may imply the use of an SeNBReconfigurationComplete message in place of the SgNBReconfigurationComplete message 1022. Further, the scg-ConfigResponseNR used in such a message (and in the RRCConnectionReconfigurationComplete message 1020 or any substitute message) may instead be an EUTRA-SCG-Response message.

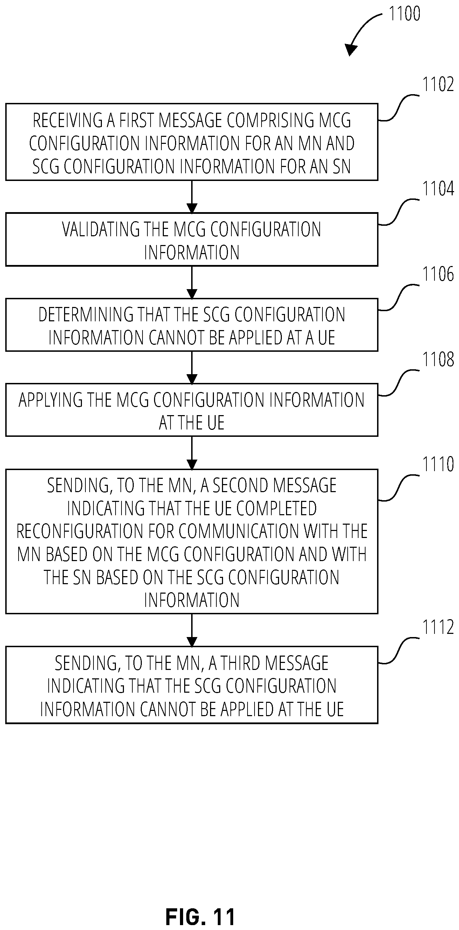

FIG. 11 illustrates a method 1100 of a UE for entering an MR-DC mode with an MN and an SN, according to an embodiment. The method 1100 includes receiving 1102 a first message comprising MCG configuration information for the MN and SCG configuration information for the SN.

The method 1100 further includes validating 1104 the MCG configuration information.

The method 1100 further includes determining 1106 that the SCG configuration information cannot be applied at the UE.

The method 1100 further includes applying 1108 the MCG configuration information at the UE.

The method 1100 further includes sending 1110, to the MN, a second message indicating that the UE completed reconfiguration for communication with the MN based on the MCG configuration information and with the SN based on the SCG configuration information.

The method 1100 further includes sending 1112, to the MN, a third message indicating that the SCG configuration information cannot be applied at the UE. This third message may be sent to the MN after the second message is sent to the MN.

In some embodiments of the method 1100, the first message is received from a source node to the UE and comprises a command to perform an inter-RAT handover of the UE from the source node to the MN, and the sending of the second message to the MN completes the inter-RAT handover of the UE from the source node to the MN.

In some embodiments of the method 1100, the first message is received from the MN

In some embodiments of the method 1100, the MR-DC mode is an EN-DC mode.

In some embodiments of the method 1100, the MR-DC mode is an NR-DC mode.

In some embodiments of the method 1100, the MR-DC mode is an NE-DC mode.

In some embodiments of the method 1100, the MR-DC mode is an NGEN-DC mode.

In some embodiments of the method 1100, determining that the SCG configuration information cannot be applied at the UE comprises determining that the SCG configuration information comprises an information element that cannot be interpreted at the UE.

In some embodiments of the method 1100, determining that the SCG configuration information cannot be applied at the UE comprises determining that the SCG configuration information was not received according to a valid security context.

In some embodiments of the method 1100, determining that the SCG configuration information cannot be applied at the UE comprises determining that the SCG configuration information is for an SCG configuration that is not supported by the UE.

In some embodiments of the method 1100, determining that the SCG configuration information cannot be applied at the UE comprises determining that that there is a radio bearer configuration mismatch within the SCG configuration information.

Embodiments contemplated herein include an apparatus comprising means to perform one or more elements of the method 1100. This apparatus may be, for example, an apparatus of a UE (such as a wireless device 1502 that is a UE, as described herein).

Embodiments contemplated herein include one or more non-transitory computer-readable media comprising instructions to cause an electronic device, upon execution of the instructions by one or more processors of the electronic device, to perform one or more elements of the method 1100. This non-transitory computer-readable media may be, for example, a memory of a UE (such as a memory 1506 of a wireless device 1502 that is a UE, as described herein).

Embodiments contemplated herein include an apparatus comprising logic, modules, or circuitry to perform one or more elements of the method 1100. This apparatus may be, for example, an apparatus of a UE (such as a wireless device 1502 that is a UE, as described herein).

Embodiments contemplated herein include an apparatus comprising: one or more processors and one or more computer-readable media comprising instructions that, when executed by the one or more processors, cause the one or more processors to perform one or more elements of the method 1100. This apparatus may be, for example, an apparatus of a UE (such as a wireless device 1502 that is a UE, as described herein).

Embodiments contemplated herein include a signal as described in or related to one or more elements of the method 1100.

Embodiments contemplated herein include a computer program or computer program product comprising instructions, wherein execution of the program by a processor is to cause the processor to carry out one or more elements of the method 1100. The processor may be a processor of a UE (such as a processor(s) 1504 of a wireless device 1502 that is a UE, as described herein). These instructions may be, for example, located in the processor and/or on a memory of the UE (such as a memory 1506 of a wireless device 1502 that is a UE, as described herein).

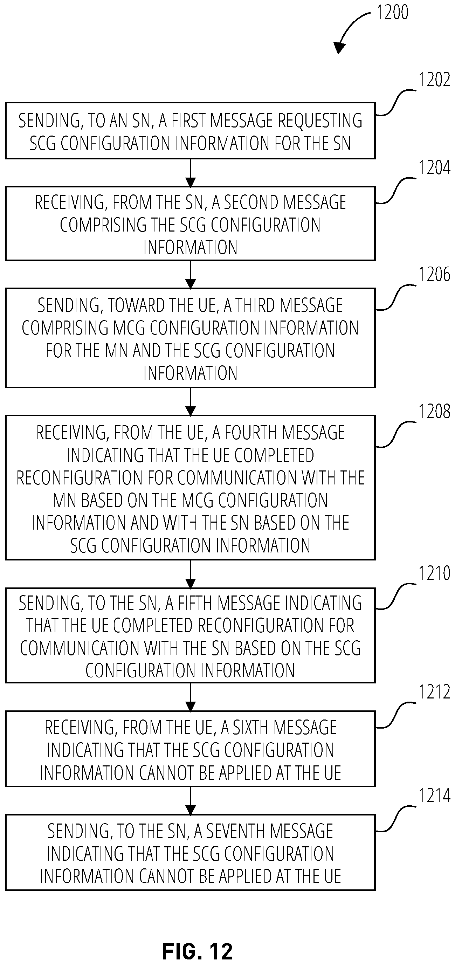

FIG. 12 illustrates a method 1200 of an MN operable with a UE using an MR-DC mode with the MN and an SN, according to an embodiment. The method 1200 includes sending 1202, to the SN, a first message requesting SCG configuration information for the SN.

The method 1200 further includes receiving 1204, from the SN, a second message comprising the SCG configuration information.

The method 1200 further includes sending 1206, toward the UE, a third message comprising MCG configuration information for the MN and the SCG configuration information.

The method 1200 further includes receiving 1208, from the UE, a fourth message indicating that the UE completed reconfiguration for communication with the MN based on the MCG configuration information and with the SN based on the SCG configuration information.

The method 1200 further includes sending 1210, to the SN, a fifth message indicating that the UE completed reconfiguration for communication with the SN based on the SCG configuration information.

The method 1200 further includes receiving 1212, from the UE, a sixth message indicating that the SCG configuration information cannot be applied at the UE.

The method 1200 further includes sending 1214, to the SN, a seventh message indicating that the SCG configuration information cannot be applied at the UE. This seventh message may be sent to the SN after the fifth message is sent to the SN.

In some embodiments of the 1200, the third message comprises a command to perform an inter-RAT handover of the UE from a source node for the UE to the MN, and sending the third message toward the UE comprises sending the third message to the source node for the UE.

In some embodiments of the 1200, sending the third message toward the UE comprises sending the third message to the UE.

In some embodiments of the method 1200, the MR-DC mode is an EN-DC mode.

In some embodiments of the method 1200, the MR-DC mode is an NR-DC mode.

In some embodiments of the method 1200, the MR-DC mode is an NE-DC mode.

In some embodiments of the method 1200, the MR-DC mode is an NGEN-DC mode.

Embodiments contemplated herein include an apparatus comprising means to perform one or more elements of the method 1200. This apparatus may be, for example, an apparatus of a base station (such as a network device 1518 that is a base station, as described herein).

Embodiments contemplated herein include one or more non-transitory computer-readable media comprising instructions to cause an electronic device, upon execution of the instructions by one or more processors of the electronic device, to perform one or more elements of the method 1200. This non-transitory computer-readable media may be, for example, a memory of a base station (such as a memory 1522 of a network device 1518 that is a base station, as described herein).

Embodiments contemplated herein include an apparatus comprising logic, modules, or circuitry to perform one or more elements of the method 1200. This apparatus may be, for example, an apparatus of a base station (such as a network device 1518 that is a base station, as described herein).

Embodiments contemplated herein include an apparatus comprising: one or more processors and one or more computer-readable media comprising instructions that, when executed by the one or more processors, cause the one or more processors to perform one or more elements of the method 1200. This apparatus may be, for example, an apparatus of a base station (such as a network device 1518 that is a base station, as described herein).

Embodiments contemplated herein include a signal as described in or related to one or more elements of the method 1200.

Embodiments contemplated herein include a computer program or computer program product comprising instructions, wherein execution of the program by a processing element is to cause the processing element to carry out one or more elements of the method 1200. The processor may be a processor of a base station (such as a processor(s) 1520 of a network device 1518 that is a base station, as described herein). These instructions may be, for example, located in the processor and/or on a memory of the base station (such as a memory 1522 of a network device 1518 that is a base station, as described herein).

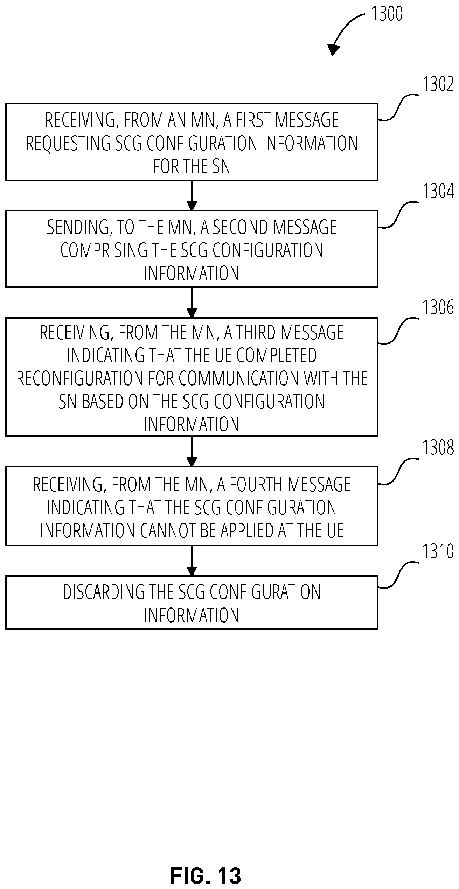

FIG. 13 illustrates a method 1300 of an SN operable with a UE using an MR-DC mode with an MN and the SN, according to an embodiment. The method 1300 includes receiving 1302, from the MN, a first message requesting SCG configuration information for the SN.

The method 1300 further includes sending 1304, to the MN, a second message comprising the SCG configuration information.

The method 1300 further includes receiving 1306, from the MN, a third message indicating that the UE completed reconfiguration for communication with the SN based on the SCG configuration information.

The method 1300 further includes receiving 1308, from the MN, a fourth message indicating that the SCG configuration information cannot be applied at the UE. This fourth message may be received from the MN after the third message is received.

The method 1300 further includes discarding 1310 the SCG configuration information.

In some embodiments of the method 1300, the MR-DC mode is an EN-DC mode.

In some embodiments of the method 1300, the MR-DC mode is an NR-DC mode.

In some embodiments of the method 1300, the MR-DC mode is an NE-DC mode.

In some embodiments of the method 1300, the MR-DC mode is an NGEN-DC mode.

Embodiments contemplated herein include an apparatus comprising means to perform one or more elements of the method 1300. This apparatus may be, for example, an apparatus of a base station (such as a network device 1518 that is a base station, as described herein).

Embodiments contemplated herein include one or more non-transitory computer-readable media comprising instructions to cause an electronic device, upon execution of the instructions by one or more processors of the electronic device, to perform one or more elements of the method 1300. This non-transitory computer-readable media may be, for example, a memory of a base station (such as a memory 1522 of a network device 1518 that is a base station, as described herein).

Embodiments contemplated herein include an apparatus comprising logic, modules, or circuitry to perform one or more elements of the method 1300. This apparatus may be, for example, an apparatus of a base station (such as a network device 1518 that is a base station, as described herein).

Embodiments contemplated herein include an apparatus comprising: one or more processors and one or more computer-readable media comprising instructions that, when executed by the one or more processors, cause the one or more processors to perform one or more elements of the method 1300. This apparatus may be, for example, an apparatus of a base station (such as a network device 1518 that is a base station, as described herein).

Embodiments contemplated herein include a signal as described in or related to one or more elements of the method 1300.

Embodiments contemplated herein include a computer program or computer program product comprising instructions, wherein execution of the program by a processing element is to cause the processing element to carry out one or more elements of the method 1300. The processor may be a processor of a base station (such as a processor(s) 1520 of a network device 1518 that is a base station, as described herein). These instructions may be, for example, located in the processor and/or on a memory of the base station (such as a memory 1522 of a network device 1518 that is a base station, as described herein).

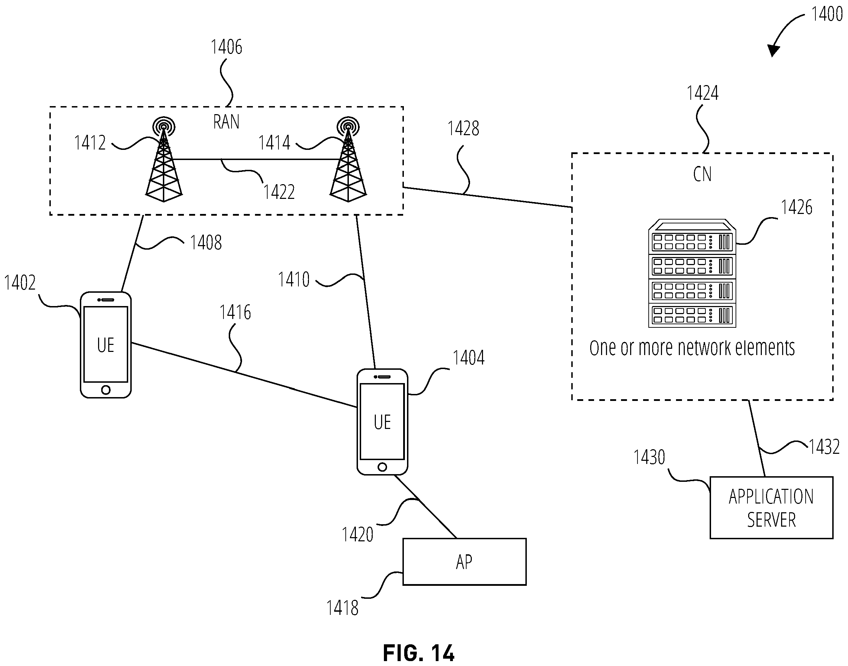

FIG. 14 illustrates an example architecture of a wireless communication system 1400, according to embodiments disclosed herein. The following description is provided for an example wireless communication system 1400 that operates in conjunction with the LTE system standards and/or 5G or NR system standards as provided by 3GPP technical specifications.

As shown by FIG. 14, the wireless communication system 1400 includes UE 1402 and UE 1404 (although any number of UEs may be used). In this example, the UE 1402 and the UE 1404 are illustrated as smartphones (e.g., handheld touchscreen mobile computing devices connectable to one or more cellular networks), but may also comprise any mobile or non-mobile computing device configured for wireless communication.

The UE 1402 and UE 1404 may be configured to communicatively couple with a RAN 1406. In embodiments, the RAN 1406 may be NG-RAN, E-UTRAN, etc. The UE 1402 and UE 1404 utilize connections (or channels) (shown as connection 1408 and connection 1410, respectively) with the RAN 1406, each of which comprises a physical communications interface. The RAN 1406 can include one or more base stations, such as base station 1412 and base station 1414, that enable the connection 1408 and connection 1410.

In this example, the connection 1408 and connection 1410 are air interfaces to enable such communicative coupling, and may be consistent with RAT(s) used by the RAN 1406, such as, for example, an LTE and/or NR.

In some embodiments, the UE 1402 and UE 1404 may also directly exchange communication data via a sidelink interface 1416. The UE 1404 is shown to be configured to access an access point (shown as AP 1418) via connection 1420. By way of example, the connection 1420 can comprise a local wireless connection, such as a connection consistent with any IEEE 802.11 protocol, wherein the AP 1418 may comprise a Wi-Fi^{®} router. In this example, the AP 1418 may be connected to another network (for example, the Internet) without going through a CN 1424.

In embodiments, the UE 1402 and UE 1404 can be configured to communicate using orthogonal frequency division multiplexing (OFDM) communication signals with each other or with the base station 1412 and/or the base station 1414 over a multicarrier communication channel in accordance with various communication techniques, such as, but not limited to, an orthogonal frequency division multiple access (OFDMA) communication technique (e.g., for downlink communications) or a single carrier frequency division multiple access (SC-FDMA) communication technique (e.g., for uplink and ProSe or sidelink communications), although the scope of the embodiments is not limited in this respect. The OFDM signals can comprise a plurality of orthogonal subcarriers.

In some embodiments, all or parts of the base station 1412 or base station 1414 may be implemented as one or more software entities running on server computers as part of a virtual network. In addition, or in other embodiments, the base station 1412 or base station 1414 may be configured to communicate with one another via interface 1422. In embodiments where the wireless communication system 1400 is an LTE system (e.g., when the CN 1424 is an EPC), the interface 1422 may be an X2 interface. The X2 interface may be defined between two or more base stations (e.g., two or more eNBs and the like) that connect to an EPC, and/or between two eNBs connecting to the EPC. In embodiments where the wireless communication system 1400 is an NR system (e.g., when CN 1424 is a 5GC), the interface 1422 may be an Xn interface. The Xn interface is defined between two or more base stations (e.g., two or more gNBs and the like) that connect to 5GC, between a base station 1412 (e.g., a gNB) connecting to 5GC and an eNB, and/or between two eNBs connecting to 5GC (e.g., CN 1424).

The RAN 1406 is shown to be communicatively coupled to the CN 1424. The CN 1424 may comprise one or more network elements 1426, which are configured to offer various data and telecommunications services to customers/subscribers (e.g., users of UE 1402 and UE 1404) who are connected to the CN 1424 via the RAN 1406. The components of the CN 1424 may be implemented in one physical device or separate physical devices including components to read and execute instructions from a machine-readable or computer-readable medium (e.g., a non-transitory machine-readable storage medium).

In embodiments, the CN 1424 may be an EPC, and the RAN 1406 may be connected with the CN 1424 via an S1 interface 1428. In embodiments, the S1 interface 1428 may be split into two parts, an S1 user plane (S1-U) interface, which carries traffic data between the base station 1412 or base station 1414 and a serving gateway (S-GW), and the S1-MME interface, which is a signaling interface between the base station 1412 or base station 1414 and mobility management entities (MMEs).

In embodiments, the CN 1424 may be a 5GC, and the RAN 1406 may be connected with the CN 1424 via an NG interface 1428. In embodiments, the NG interface 1428 may be split into two parts, an NG user plane (NG-U) interface, which carries traffic data between the base station 1412 or base station 1414 and a user plane function (UPF), and the S1 control plane (NG-C) interface, which is a signaling interface between the base station 1412 or base station 1414 and access and mobility management functions (AMFs).

Generally, an application server 1430 may be an element offering applications that use internet protocol (IP) bearer resources with the CN 1424 (e.g., packet switched data services). The application server 1430 can also be configured to support one or more communication services (e.g., VoIP sessions, group communication sessions, etc.) for the UE 1402 and UE 1404 via the CN 1424. The application server 1430 may communicate with the CN 1424 through an IP communications interface 1432.

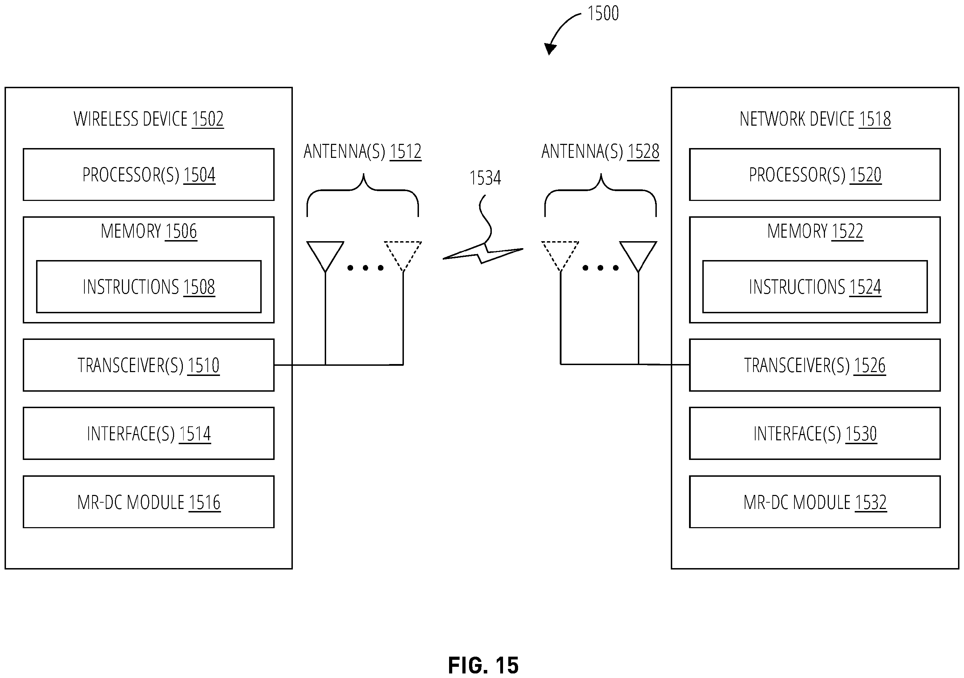

FIG. 15 illustrates a system 1500 for performing signaling 1534 between a wireless device 1502 and a network device 1518, according to embodiments disclosed herein. The system 1500 may be a portion of a wireless communications system as herein described. The wireless device 1502 may be, for example, a UE of a wireless communication system. The network device 1518 may be, for example, a base station (e.g., an eNB or a gNB) of a wireless communication system.

The wireless device 1502 may include one or more processor(s) 1504. The processor(s) 1504 may execute instructions such that various operations of the wireless device 1502 are performed, as described herein. The processor(s) 1504 may include one or more baseband processors implemented using, for example, a central processing unit (CPU), a digital signal processor (DSP), an application specific integrated circuit (ASIC), a controller, a field programmable gate array (FPGA) device, another hardware device, a firmware device, or any combination thereof configured to perform the operations described herein.

The wireless device 1502 may include a memory 1506. The memory 1506 may be a non-transitory computer-readable storage medium that stores instructions 1508 (which may include, for example, the instructions being executed by the processor(s) 1504). The instructions 1508 may also be referred to as program code or a computer program. The memory 1506 may also store data used by, and results computed by, the processor(s) 1504.

The wireless device 1502 may include one or more transceiver(s) 1510 that may include radio frequency (RF) transmitter and/or receiver circuitry that use the antenna(s) 1512 of the wireless device 1502 to facilitate signaling (e.g., the signaling 1534) to and/or from the wireless device 1502 with other devices (e.g., the network device 1518) according to corresponding RATs.

The wireless device 1502 may include one or more antenna(s) 1512 (e.g., one, two, four, or more). For embodiments with multiple antenna(s) 1512, the wireless device 1502 may leverage the spatial diversity of such multiple antenna(s) 1512 to send and/or receive multiple different data streams on the same time and frequency resources. This behavior may be referred to as, for example, multiple input multiple output (MIMO) behavior (referring to the multiple antennas used at each of a transmitting device and a receiving device that enable this aspect). MIMO transmissions by the wireless device 1502 may be accomplished according to precoding (or digital beamforming) that is applied at the wireless device 1502 that multiplexes the data streams across the antenna(s) 1512 according to known or assumed channel characteristics such that each data stream is received with an appropriate signal strength relative to other streams and at a desired location in the spatial domain (e.g., the location of a receiver associated with that data stream). Certain embodiments may use single user MIMO (SU-MIMO) methods (where the data streams are all directed to a single receiver) and/or multi user MIMO (MU-MIMO) methods (where individual data streams may be directed to individual (different) receivers in different locations in the spatial domain).

In certain embodiments having multiple antennas, the wireless device 1502 may implement analog beamforming techniques, whereby phases of the signals sent by the antenna(s) 1512 are relatively adjusted such that the (joint) transmission of the antenna(s) 1512 can be directed (this is sometimes referred to as beam steering).

The wireless device 1502 may include one or more interface(s) 1514. The interface(s) 1514 may be used to provide input to or output from the wireless device 1502. For example, a wireless device 1502 that is a UE may include interface(s) 1514 such as microphones, speakers, a touchscreen, buttons, and the like in order to allow for input and/or output to the UE by a user of the UE. Other interfaces of such a UE may be made up of made up of transmitters, receivers, and other circuitry (e.g., other than the transceiver(s) 1510/antenna(s) 1512 already described) that allow for communication between the UE and other devices and may operate according to known protocols (e.g., Wi-Fi^{®}, Bluetooth^{®}, and the like).

The wireless device 1502 may include an MR-DC module 1516. The MR-DC module 1516 may be implemented via hardware, software, or combinations thereof. For example, the MR-DC module 1516 may be implemented as a processor, circuit, and/or instructions 1508 stored in the memory 1506 and executed by the processor(s) 1504. In some examples, the MR-DC module 1516 may be integrated within the processor(s) 1504 and/or the transceiver(s) 1510. For example, the MR-DC module 1516 may be implemented by a combination of software components (e.g., executed by a DSP or a general processor) and hardware components (e.g., logic gates and circuitry) within the processor(s) 1504 or the transceiver(s) 1510.

The MR-DC module 1516 may be used for various aspects of the present disclosure, for example, aspects of FIG. 1 through FIG. 4 and FIG. 8 through FIG. 13. The MR-DC module 1516 is configured to generate, send, receive, and/or decode messages attendant to preventing an MCG link failure at the wireless device 1502 due to an SCG link failure upon the wireless device 1502 attempting to enter an MR-DC mode with one or more base stations (one of which may be, for example, the network device 1518).

The network device 1518 may include one or more processor(s) 1520. The processor(s) 1520 may execute instructions such that various operations of the network device 1518 are performed, as described herein. The processor(s) 1504 may include one or more baseband processors implemented using, for example, a CPU, a DSP, an ASIC, a controller, an FPGA device, another hardware device, a firmware device, or any combination thereof configured to perform the operations described herein.

The network device 1518 may include a memory 1522. The memory 1522 may be a non-transitory computer-readable storage medium that stores instructions 1524 (which may include, for example, the instructions being executed by the processor(s) 1520). The instructions 1524 may also be referred to as program code or a computer program. The memory 1522 may also store data used by, and results computed by, the processor(s) 1520.

The network device 1518 may include one or more transceiver(s) 1526 that may include RF transmitter and/or receiver circuitry that use the antenna(s) 1528 of the network device 1518 to facilitate signaling (e.g., the signaling 1534) to and/or from the network device 1518 with other devices (e.g., the wireless device 1502) according to corresponding RATs.

The network device 1518 may include one or more antenna(s) 1528 (e.g., one, two, four, or more). In embodiments having multiple antenna(s) 1528, the network device 1518 may perform MIMO, digital beamforming, analog beamforming, beam steering, etc., as has been described.

The network device 1518 may include one or more interface(s) 1530. The interface(s) 1530 may be used to provide input to or output from the network device 1518. For example, a network device 1518 that is a base station may include interface(s) 1530 made up of transmitters, receivers, and other circuitry (e.g., other than the transceiver(s) 1526/antenna(s) 1528 already described) that enables the base station to communicate with other equipment in a core network, and/or that enables the base station to communicate with external networks, computers, databases, and the like for purposes of operations, administration, and maintenance of the base station or other equipment operably connected thereto.

The network device 1518 may include an MR-DC module 1532. The MR-DC module 1532 may be implemented via hardware, software, or combinations thereof. For example, the MR-DC module 1532 may be implemented as a processor, circuit, and/or instructions 1524 stored in the memory 1522 and executed by the processor(s) 1520. In some examples, the MR-DC module 1532 may be integrated within the processor(s) 1520 and/or the transceiver(s) 1526. For example, the MR-DC module 1532 may be implemented by a combination of software components (e.g., executed by a DSP or a general processor) and hardware components (e.g., logic gates and circuitry) within the processor(s) 1520 or the transceiver(s) 1526.

The MR-DC module 1532 may be used for various aspects of the present disclosure, for example, aspects of FIGS. FIG. 1 through FIG. 4 and FIG. 8 through FIG. 13. The MR-DC module 1532 is configured to generate, send, receive, and/or decode messages attendant to preventing an MCG link failure at the a UE (that may be, for example, the wireless device 1502) due to an SCG link failure upon the UE attempting to enter an MR-DC mode with, for example, the MR-DC module 1532 (and another base station).

For one or more embodiments, at least one of the components set forth in one or more of the preceding figures may be configured to perform one or more operations, techniques, processes, and/or methods as set forth herein. For example, a baseband processor as described herein in connection with one or more of the preceding figures may be configured to operate in accordance with one or more of the examples set forth herein. For another example, circuitry associated with a UE, base station, network element, etc. as described above in connection with one or more of the preceding figures may be configured to operate in accordance with one or more of the examples set forth herein.

Any of the above described embodiments may be combined with any other embodiment (or combination of embodiments), unless explicitly stated otherwise. The foregoing description of one or more implementations provides illustration and description, but is not intended to be exhaustive or to limit the scope of embodiments to the precise form disclosed. Modifications and variations are possible in light of the above teachings or may be acquired from practice of various embodiments.

Embodiments and implementations of the systems and methods described herein may include various operations, which may be embodied in machine-executable instructions to be executed by a computer system. A computer system may include one or more general-purpose or special-purpose computers (or other electronic devices). The computer system may include hardware components that include specific logic for performing the operations or may include a combination of hardware, software, and/or firmware.

It should be recognized that the systems described herein include descriptions of specific embodiments. These embodiments can be combined into single systems, partially combined into other systems, split into multiple systems or divided or combined in other ways. In addition, it is contemplated that parameters, attributes, aspects, etc. of one embodiment can be used in another embodiment. The parameters, attributes, aspects, etc. are merely described in one or more embodiments for clarity, and it is recognized that the parameters, attributes, aspects, etc. can be combined with or substituted for parameters, attributes, aspects, etc. of another embodiment unless specifically disclaimed herein.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

Although the foregoing has been described in some detail for purposes of clarity, it will be apparent that certain changes and modifications may be made without departing from the principles thereof. It should be noted that there are many alternative ways of implementing both the processes and apparatuses described herein. Accordingly, the present embodiments are to be considered illustrative and not restrictive, and the description is not to be limited to the details given herein, but may be modified within the scope and equivalents of the appended claims.

Exemplary embodiments of the present disclosure are set out in the following items:
1. A method of a user equipment (UE) configured to operate in a multi-radio dual connectivity (MR-DC) mode with a master node (MN) and a secondary node (SN), comprising:
   receiving a first message comprising master cell group (MCG) configuration information for the MN and secondary cell group (SCG) configuration information for the SN;
   validating the MCG configuration information;
   determining that the SCG configuration information cannot be applied at the UE;
   applying the MCG configuration information at the UE;
   sending, to the MN, a second message indicating that the UE completed reconfiguration for communication with the MN based on the MCG configuration information and with the SN based on the SCG configuration information; and
   sending, to the MN, a third message indicating that the SCG configuration information cannot be applied at the UE, wherein the third message is sent to the MN after the second message is sent to the MN.
2. The method of item 1, wherein:
   the first message is received from a source node to the UE and comprises a command to perform an inter-radio access technology (RAT) handover of the UE from the source node to the MN; and
   the sending of the second message to the MN completes the inter-RAT handover of the UE from the source node to the MN.
3. The method of any of items 1-2, wherein the first message is received from the MN.
4. The method of any of items 1-3, wherein the MR-DC mode is an Evolved Universal Terrestrial Radio Access (E-UTRA)-new radio (NR) dual connectivity (EN-DC) mode.
5. The method of any of items 1-4, wherein the MR-DC mode is a new radio (NR)-NR dual connectivity (NR-DC) mode.
6. The method of any of items 1-5, wherein the MR-DC mode is a new radio (NR)-Evolved Universal Terrestrial Radio Access (E-UTRA) dual connectivity (NE-DC) mode.
7. The method of any of items 1-6, wherein the determining that the SCG configuration information cannot be applied at the UE comprises determining that the SCG configuration information comprises an information element that cannot be interpreted at the UE.
8. The method of any of items 1-7, wherein determining that the SCG configuration information cannot be applied at the UE comprises determining that the SCG configuration information was not received according to a valid security context.
9. The method of any of items 1-8, wherein determining that the SCG configuration information cannot be applied at the UE comprises determining that the SCG configuration information is for an SCG configuration that is not supported by the UE.
10. The method of any of items 1-9, wherein determining that the SCG configuration information cannot be applied at the UE comprises determining that there is a radio bearer configuration mismatch within the SCG configuration information
11. A master node (MN) to operate with a user equipment (UE) using a multi-radio dual connectivity (MR-DC) mode with the MN and a secondary node (SN), comprising:
   one or more processors; and
   a memory storing instructions that, when executed by the one or more processors, configure the MN to:
      send, to the SN, a first message requesting secondary cell group (SCG) configuration information for the SN;
      receive, from the SN, a second message comprising the SCG configuration information;
      send, toward the UE, a third message comprising master cell group (MCG) configuration information for the MN and the SCG configuration information;
      receive, from the UE, a fourth message indicating that the UE completed reconfiguration for communication with the MN based on the MCG configuration information and with the SN based on the SCG configuration information;
      send, to the SN, a fifth message indicating that the UE completed reconfiguration for communication with the SN based on the SCG configuration information;
      receive, from the UE, a sixth message indicating that the SCG configuration information cannot be applied at the UE; and
      send, to the SN, a seventh message indicating that the SCG configuration information cannot be applied at the UE, wherein the seventh message is sent to the SN after the fifth message is sent to the SN.
12. The MN of item 11, wherein:
   the third message comprises a command to perform an inter-radio access technology (RAT) handover of the UE from a source node for the UE to the MN; and
   the instructions, when executed by the one or more processors, configure the MN to send the third message toward the UE by sending the third message to the source node for the UE.
13. The MN of any of items 11-12, wherein the instructions, when executed by the one or more processors, configure the MN to send the third message toward the UE by sending the third message to the UE.
14. The MN of any of items 11-13, wherein the MR-DC mode is an Evolved Universal Terrestrial Radio Access (E-UTRA)-new radio (NR) dual connectivity (EN-DC) mode.
15. The MN of any of items 11-14, wherein the MR-DC mode is a new radio (NR)-NR dual connectivity (NR-DC) mode.
16. The MN of any of items 11-15, wherein the MR-DC mode is a new radio (NR)-Evolved Universal Terrestrial Radio Access (E-UTRA) dual connectivity (NE-DC) mode.
17. A non-transitory computer-readable storage medium comprising instructions that, when executed by a secondary node (SN) operating with a user equipment (UE) using a multi-radio dual connectivity (MR-DC) mode with a master node (MN) and the SN, cause the SN to:
   receive, from the MN, a first message requesting secondary cell group (SCG) configuration information for the SN;
   send, to the MN, a second message comprising the SCG configuration information;
   receive, from the MN, a third message indicating that the UE completed reconfiguration for communication with the SN based on the SCG configuration information;
   receive, from the MN, a fourth message indicating that the SCG configuration information cannot be applied at the UE, wherein the fourth message is received from the MN after the third message is received from the MN; and
   discard the SCG configuration information.
18. The non-transitory computer-readable storage medium of item 17, wherein the MR-DC mode is an Evolved Universal Terrestrial Radio Access (E-UTRA)-new radio (NR) dual connectivity (EN-DC) mode.
19. The non-transitory computer-readable storage medium of any of items 17-18, wherein the MR-DC mode is a new radio (NR)-NR dual connectivity (NR-DC) mode.
20. The non-transitory computer-readable storage medium of any of items 17-19, wherein the MR-DC mode is a new radio (NR)-Evolved Universal Terrestrial Radio Access (E-UTRA) dual connectivity (NE-DC) mode.

## Claims

1. A method of a user equipment (UE) configured to operate in a multi-radio dual connectivity (MR-DC) mode with a master node (MN) and a secondary node (SN), comprising:
receiving a first message comprising master cell group (MCG) configuration information for the MN and secondary cell group (SCG) configuration information for the SN;
validating the MCG configuration information;
determining that the SCG configuration information cannot be applied at the UE;
applying the MCG configuration information at the UE;
sending, to the MN, a second message indicating that the UE completed reconfiguration for communication with the MN based on the MCG configuration information and with the SN based on the SCG configuration information; and
sending, to the MN, a third message indicating that the SCG configuration information cannot be applied at the UE, wherein the third message is sent to the MN after the second message is sent to the MN.

2. The method of claim 1, wherein:
the first message is received from a source node to the UE and comprises a command to perform an inter-radio access technology (RAT) handover of the UE from the source node to the MN; and
the sending of the second message to the MN completes the inter-RAT handover of the UE from the source node to the MN.

3. The method of any of claims 1-2, wherein the first message is received from the MN.

4. The method of any of claims 1-3, wherein the MR-DC mode is an Evolved Universal Terrestrial Radio Access (E-UTRA)-new radio (NR) dual connectivity (EN-DC) mode; or
wherein the MR-DC mode is a new radio (NR)-NR dual connectivity (NR-DC) mode; or
wherein the MR-DC mode is a new radio (NR)-Evolved Universal Terrestrial Radio Access (E-UTRA) dual connectivity (NE-DC) mode.

5. The method of any of claims 1-4, wherein the determining that the SCG configuration information cannot be applied at the UE comprises:
determining that the SCG configuration information comprises an information element that cannot be interpreted at the UE; or
determining that the SCG configuration information was not received according to a valid security context; or
determining that the SCG configuration information is for an SCG configuration that is not supported by the UE; or
determining that there is a radio bearer configuration mismatch within the SCG configuration information.

6. A master node (MN) to operate with a user equipment (UE) using a multi-radio dual connectivity (MR-DC) mode with the MN and a secondary node (SN), comprising:
one or more processors; and
a memory storing instructions that, when executed by the one or more processors, configure the MN to:
send, to the SN, a first message requesting secondary cell group (SCG) configuration information for the SN;
receive, from the SN, a second message comprising the SCG configuration information;
send, toward the UE, a third message comprising master cell group (MCG) configuration information for the MN and the SCG configuration information;
receive, from the UE, a fourth message indicating that the UE completed reconfiguration for communication with the MN based on the MCG configuration information and with the SN based on the SCG configuration information;
send, to the SN, a fifth message indicating that the UE completed reconfiguration for communication with the SN based on the SCG configuration information;
receive, from the UE, a sixth message indicating that the SCG configuration information cannot be applied at the UE; and
send, to the SN, a seventh message indicating that the SCG configuration information cannot be applied at the UE, wherein the seventh message is sent to the SN after the fifth message is sent to the SN.

7. The MN of claim 6, wherein:
the third message comprises a command to perform an inter-radio access technology (RAT) handover of the UE from a source node for the UE to the MN; and
the instructions, when executed by the one or more processors, configure the MN to send the third message toward the UE by sending the third message to the source node for the UE.

8. The MN of any of claims 6-7, wherein the instructions, when executed by the one or more processors, configure the MN to send the third message toward the UE by sending the third message to the UE.

9. The MN of any of claims 6-8, wherein the MR-DC mode is an Evolved Universal Terrestrial Radio Access (E-UTRA)-new radio (NR) dual connectivity (EN-DC) mode.

10. The MN of any of claims 6-9, wherein the MR-DC mode is a new radio (NR)-NR dual connectivity (NR-DC) mode.

11. The MN of any of claims 6-10, wherein the MR-DC mode is a new radio (NR)-Evolved Universal Terrestrial Radio Access (E-UTRA) dual connectivity (NE-DC) mode.

12. A non-transitory computer-readable storage medium comprising instructions that, when executed by a secondary node (SN) operating with a user equipment (UE) using a multi-radio dual connectivity (MR-DC) mode with a master node (MN) and the SN, cause the SN to:
receive, from the MN, a first message requesting secondary cell group (SCG) configuration information for the SN;
send, to the MN, a second message comprising the SCG configuration information;
receive, from the MN, a third message indicating that the UE completed reconfiguration for communication with the SN based on the SCG configuration information;
receive, from the MN, a fourth message indicating that the SCG configuration information cannot be applied at the UE, wherein the fourth message is received from the MN after the third message is received from the MN; and
discard the SCG configuration information.

13. The non-transitory computer-readable storage medium of claim 12, wherein the MR-DC mode is an Evolved Universal Terrestrial Radio Access (E-UTRA)-new radio (NR) dual connectivity (EN-DC) mode.

14. The non-transitory computer-readable storage medium of any of claims 12-13, wherein the MR-DC mode is a new radio (NR)-NR dual connectivity (NR-DC) mode.

15. The non-transitory computer-readable storage medium of any of claims 12-14, wherein the MR-DC mode is a new radio (NR)-Evolved Universal Terrestrial Radio Access (E-UTRA) dual connectivity (NE-DC) mode.
